# EUROPEAN PATENT APPLICATION

(11) **EP 2 275 623 A2**
(43) Date of publication of application: **19.01.2011**
(21) Application number: 10011062.6
(22) Date of filing: 07.06.1997
(51) Int. Cl.: E04F 15/04, F16B 5/00, B27C 5/00, B27F 1/02, B27G 13/14, B27M 3/04

(54) **Floor covering, consisting of hard floor panels and method for manufacturing such floor panels**

(30) Priority: 11.06.1996 BE 9600527; 15.04.1997 BE 9700344
(62) Divisional of application: 08075888.1
(71) Applicant: Unilin Beheer B.V., 2913 LV Nieuwerkerk aan de IJssel (NL)
(72) Inventor: Moriau, Stefan S. G., 2900 Schoten (BE); Thiers, Bernard P. J., 9700 Eine (BE); Capelle, Mark G. M., 8840 Staden (BE)
(74) Representative: Donné, Eddy

(57) **Abstract**

Floor covering, consisting of hard floor panels (1) which, at least at the edges of two opposite sides (2-3, 26-27), are provided with coupling parts (4-5, 28-29), cooperating with each other, substantially in the form of a tongue (9-31) and a groove (10-32), **characterized in that** the coupling parts (4-5, 28-29) are provided with integrated mechanical locking means (6) which prevent the drifting apart of two coupled floor panels into a direction (R) perpendicular to the related edges (2-3, 26-27) and parallel to the underside (7) of the coupled floor panels (1).

## Description

This invention relates to a floor covering, consisting of hard floor panels, as well as to a method for manufacturing such floor panels.

In first instance, the invention is intended for so-called laminated floors, but generally it can also be applied for other kinds of floor covering, consisting of hard floor panels, such as veneer parquet, prefabricated parquet, or other floor panels which can be compared to laminated floor.

It is known that such floor panels can be applied in various ways.

According to a first possibility, the floor panels are attached at the underlying floor, either by glueing or by nailing them on. This technique has as a disadvantage that it is rather complicated and that subsequent changes can only be made by breaking out the floor panels.

According to a second possibility, the floor panels are installed loosely onto the underground, whereby the floor panels mutually match into each other by means of a tongue and groove coupling, whereby mostly they are glued together in the tongue and groove, too. The floor obtained in this manner, also called a floating parquet flooring, has as an advantage that it is easy to install and that the complete floor surface can move which often is convenient in order to receive possible expansion and shrinkage phenomena.

A disadvantage with a floor covering of the above-mentioned type, above all, if the floor panels are installed loosely onto the underground, consists in that during the expansion of the floor and its subsequent shrinkage, the floor panels themselves can drift apart, as a result of which undesired joints can be formed, for example, if the glue connection breaks.

In order to remedy this disadvantage, techniques have already been thought of whereby connection elements made of metal are provided between the single floor panels in order to keep them together. Such connection elements, however, are rather expensive in manufacturing them and, furthermore, their provision or the installation thereof is a time-consuming occupation.

Examples of embodiments which apply such metal connection elements are described, among others, in the documents WO 94/26999 and WO 93/13280.

Furthermore, couplings are known which allow to snap floor parts into each other, a.o. from the documents WO 94/1628, WO 96/27719 and WO 96/27721. The snapping-together effect obtained with these forms of embodiment, however, does not guarantee a 100-percent optimum counteraction against the development of gaps between the floor panels, more particularly, because in fact well-defined plays have to be provided in order to be sure that the snapping-together is possible.

From GB 424.057, a coupling for parquetry parts is known which, in consideration of the nature of the coupling, only is appropriate for massive wooden parquetry.

Furthermore, there are also couplings for panels known from the documents GB 2.117.813, GB 2.256.023 and DE 3.544.845. These couplings, however, are not appropriate for connecting floor panels.

The invention aims at an improved floor covering of the aforementioned type, the floor panels of which can be coupled to each other in an optimum manner and/or the floor panels of which can be manufactured in a smooth manner, whereby preferably one or more of the aforementioned disadvantages are excluded.

The invention also aims at the floor covering which shows the advantage that no mistakes during installing, such as gaps and such, can be created.

Furthermore, the invention also aims at a floor covering whereby the subsequent development of gaps is excluded or at least counteracted in an optimum manner, whereby also the possibility of the penetration of dirt and humidity is minimalized.

To this aim, the invention relates to a floor covering as claimed in the enclosed claims as well as to floor coverings described in the following description.

According to certain embodiments, the lower lip is over its complete thickness of the same structure of the material of the panel itself. According to variants of the invention, it is not excluded to omit this feature.

In the embodiments whereby the locking means are not formed in one piece with the core of the floor panels, it should be noted that the integrated mechanical locking means include a part of the floor panels which is connected in a fixed manner to the floor panels.

Further, according to the invention, the floor coverings as described above can show a number of additional features, as described in the detailled description. More particularly these floor coverings may show one or more of the following features:
- that the coupling parts provide in an interlocking, allowing to couple the panels free from play in respect to each other, according to all directions in the plane which is situated perpendicular to the aforementioned edges;
- that the lower lip has a thickness which is smaller than the thickness of the upper lip;
- that the lower lip is more flexible than the upper lip;
- that the locking means substantialy consist of a locking element in the form of a protrusion, provided at the lower side of the tongue and a locking element formed in the lip which borders the lower side of the groove, in the form of a recess;
- that said protrusion has a base extending along the lower surface of said tongue over a considerable length;
- that the lower lip extends beyond the upper lip and that the recess, and more particularly the contact surface providing in the locking effect, is located at least partiallly beyond the outer end of the upper lip;
- that the locking means are formed by locking elements which are located completely in the portion of the lower lip which extends beyond the upper lip, such that the lowermost point of engagement of the locking elements is located underneath the top layer of the floor panel which carries the related tongue;
- that the portion of the lower lip located beyond the upper lip is located completely below the level defined by the lower side of the upper lip;
- that said portion of the lower lip is located completely below the central line of the panel;
- that the distance, by which the lower lip extends beyond the upper lip, is smaller than one time the total thickness of the floor panel;
- that the lip bordering the underside of the groove is elastically bendable;
- that the thickness of the lower lip increases from the deepest point of the recess towards the innermost point of the groove;
- that the lower lip bordering the lower side of the groove is shows a contact surface and that at least this contact surface is inwardly inclined;
- that said contact surface at the lower lip cooperates with the contact surface at the lower side of the tongue and that both contact surfaces are inclined;
- that both contact surfaces are inclined and have corresponding inclinations;
- that the lower lip has an inclined locking portion which extends in such a manner that the distance up to the upper edge of the floor panel diminishes from below in upward direction;
- that the locking means are provided with locking elements which are realized in such a manner that the tangent line which is defined by the contact surfaces of said locking elements forms an angle with the underside of the floor panels which is different from 90 degrees;
- that the tangent line forms an angle with the underside of the floor panels which is 30° to 70°;
- that the total thickness of each floor panel is larger than or equal to 5 mm;
- that the locking means comprise a recess in the lower lip bordering the lower side of the groove and a protrusion at the lower side of the tongue and that the lower surface of the aforementioned protrusion is bordered by at least two portions, respectively a portion with a strong inclination providing for the locking effect, and a portion with a weaker inclination which renders the engagement of the coupling parts easier;
- that the lower side of the tongue is provided with a curvature;
- that there is a curvature at the upper side of the lower lip, in other words the lip bordering the lower side of the groove, which curvature forms a guidance when turning two floor panels into each other;
- that dust chambers or similar are provided between all sides of the engaged floor panels which are directed laterally towards each other;
- that in the engagement direction, apart from said contact surfaces there exists only one substantial contact point between two coupled floor panels, which is formed by a section at the location of the top side of the floor panels;
- that said floor panels are provided with contact surfaces, more particularly abutment surfaces, formed by the upper side of the tongue and the upper side of the groove which, over the largest portion of their length, run parallel to the plane which is defined by the floor panels;
- that the underside of the upper lip, bordering the upper side of the groove, is provided with a chamfer;
- that the locking means comprise contact surfaces which are located on radii around the upper edges of the floor panels, the difference between these radii being zero or not larger than 2 mm;
- that the locking means, and more particularly the upper side of the lower lip and/or the lower side of the tongue, show a portion having a curvature substantially with a radius, said curvature having a center which is located within the circle which extends with a radius of 3 mm around the upper edge of the panel concerned;
- that the upper side of the upper lip is in the same plane as the upper surface of the panel;
- that the tongue and groove allow to couple the panels by a turning movement around the upper edges of the panels, whereby during this movement the tongue can freely be slid into the groove;
- that the panels have short sides and longer sides and that the locking means comprise contact surfaces which at the short sides have a stronger inclination than at the longer sides;
- that the floor panels are realized as laminated flooring, whereby on the core one or more layers, among which a decorative layer forming said decorative surface, are provided and whereby a backing layer is provided at the underside;
- that the floor panels have a wood based core, comprising a ground wood product which, together with a binding agent is composed to a single compound and/or is made of chip board with fine chips;
- that the wood based core of the floor panels consists of HDF board or MDF board, whereby the coupling parts and the locking means are formed out of this board;
- that the coupling parts at their surface, in other words, the edges of the floor panels, are treated with a surface densifying agent, more particularly, a surface hardening agent;
- that the floor panels are connected free of glue, such that they can be disassembled and be re-used;
- that the coupling parts and locking means are formed by profiled edges extending continuously along the complete lenght of the concerned sides of the panels;
- that the coupling parts and locking means are constructed such that they allow the joining together of two panels at least by means of a turning movement or at least by shifting them towards each other;
- that the coupling means, including the locking means are made in one piece substantialy out of the core;
- that said coupling means, including the locking means are formed out of milled profiles;
- that the floor panels are rectangular and show a shorter and a longer side and that coupling means, including the locking means are at least provided at the longer sides of the panels;
- that the floor panels are rectangular and show a shorter and a longer side and in that coupling means, including the locking means are at least provided at the shorter sides of the panels;
- that the locking means comprise a recess in the lip bordering the lower side of the groove and a protrusion at the lower side of the panel and that the tongue and groove have a shape such that in coupled condition of two floor panels there exists a chamber between those sides of the protrusion and the recess that are located opposite to the sides at which the contact surfaces are formed;
- that the locking means comprise a recess in the lip bordering the lower side of the groove and a protrusion at the lower side of the panel and in that there is a space between said protrusion and a portion of said lower lip, more particularly below said protrusion, allowing a further penetration of the protrusion in the recess, when necessary;
- that the panels comprise locking means providing a snapping-together effect;
- that the floor panels are rectangular and that, on all four sides, more particularly two by two, they are provided with coupling parts providing a locking as well as in vertical as in horizontal direction;
- that the coupling parts and locking means at one pair of the edges show the same characteristics as at the other pair of edges;
- that the panels and more particularly lower lip, i.e. the lip bordering the lower side of the groove, is free from additional elements and structurally is only made out of the board of the panels itself;
- that the lower side of the lower lip is coplanar with the lower side of the panel.

Due to the fact that, in a preferred embodiment, the coupling parts provide for an interlocking free from play, as well as due to the fact that these coupling parts are manufactured in one piece, from the basic material of the floor panels, a perfect connection between adjacent floor panels can always be guaranteed, even with repeated expansion and shrinkage of the floor surface.

In the described embodiments whereby the described coupling parts are provided at at least one pair of edges, in a preferred version thereof, whereby the panels consist of elongated panels, these coupling parts shall be applied along the longitudinal sides of these panels.

According to a particular form of the embodiment, coupling parts are provided at the other two sides, too, either of another construction or not.

According to a preferred form of embodiment, as already mentioned in the above enumeration, for the basic material use shall be made of a wood based product, which is ground, and by means of a binding agent composed to a single compound. More particularly, for the core use shall be made of finely-ground wood which preferably is glued, more particularly, watertightly glued. Still more particularly, for the core use shall be made of so-called HDF board (High Density Fibreboard) or MDF (Medium Density Fibreboard).

The fact that the invention, in a preferred embodiment, is applied to floor panels the basis material of which consists of the materials described above, offers the advantage that with a processing of this material, very smooth surfaces are obtained whereby very precise couplings can be realized, which in first instance, is important in the case of a snap-together connection and/or turning connection free from play. Also, very special forms of coupling parts can be manufactured in a very simple manner because the aforementioned kinds of material can be processed particularly easy.

The surfaces obtained with HDF and MDF also have the advantage that the floor panels mutually can fluently be shifted alongside each other in interlocked condition, even when engaged with a tensioning force.

The inventor also found out that the aforementioned materials, in particular HDF and MDF, show ideal features in order to realize a connection, such as claimed in the claims, as these materials show the right features in respect to elastic deformation in order to, on the one hand, realize a snap-together effect, and, on the other hand, receive expansion and shrinkage forces in an elastic manner, whereby it is avoided that the floor panels come unlocked or are damaged in an irreparable manner.

In the case that for the core use is made of a material based on synthetic material, to this end solid synthetic material can be used as well as a mixture of synthetic materials, possibly composed of recycled materials.

The floor covering preferably is formed by joining the floor panels to each other free of glue. Hereby, the connections are of such nature that the floor panels can be disassembled without being damaged, such that, for example, when moving, they can be taken along in order to be placed again. It is, however, clear that a glueing between tongue and groove is not excluded.

Of course, the invention also relates to floor panels which allow the realization of the aforementioned floor covering.

Further the invention also relates to methods of assembling a floor covering, as described in the following description.

The invention also relates to a method for the manufacturing of the aforementioned floor panels, said method showing features as described in the following description.

These methods show the advantage that the tongues and/or grooves, including the corresponding locking means, can be provided at the floor panels at high production speeds without problems. More particularly, it aims at a method which allows that the rather complicated forms of the tongue and the groove of the aforementioned floor panels can be realized, whereby the use of small milling cutters, for example finger cutters, with diameters smaller than the depth of the tongue or groove can be excluded.

To this aim, this method shows the characteristic that the tongue and/or groove is realized by means of a milling process with at least two subsequent milling cycles by means of milling cutters which are positioned in different angles in respect to the related floor panel. During each of the aforementioned milling cycles, preferably substantially the final form of one flank, either of the tongue or of the groove, is realized.

For the aforementioned two milling cycles, thus, milling cutters are used which extend outside the groove, respectively the tongue. More particularly the diameters of these milling cutters shall at least be 5 times and even better 20 times larger than the thickness of the floor panels.

The use of milling cutters showing the aforementioned diameters has as an advantage that the normal production speeds can be maintained which are also applied during milling of a classical straight tongue and groove. There is also the advantage obtained that the installation of such milling cutters induce only minor or no additional costs because such milling cutters can be placed directly upon a motor shaft and/or the usual machines can be used.

With the intention of better showing the characteristics according to the invention, in the following, as an example without any limitative character, several preferred forms of embodiment are described, with reference to the accompanying drawings, wherein:
figure 1 represents a floor panel of a floor covering according to the invention;
figure 2, on a larger scale, represents a cross-section according to line II-II in figure 1;
figures 3 and 4 represent how two floor panels with coupling parts according to figure 2 match into each other;
figure 5, on a larger scale, represents a cross-section according to line V-V in figure 1;
figures 6 and 7 represent how two floor panels with coupling parts according to figure 5 match into each other;
figures 8 to 11 represent a number of variants of coupling parts of floor panels according to the invention;
figure 12 schematically represents how the floor parts can be provided with coupling parts;
figure 13 represents a cross-section according to line XIII-XIII in figure 12;
figures 14 to 21, on a larger scale and in cross-section, represent the penetration of the milling cutters which are indicated in figure 12 with arrows F14 to F21;
figure 22 represents a floor panel according to the invention;
figure 23, on a larger scale, represents the coupling of two floor panels of figure 22;
figures 24 and 25 represent two manners of coupling floor panels according to figure 22 to each other.

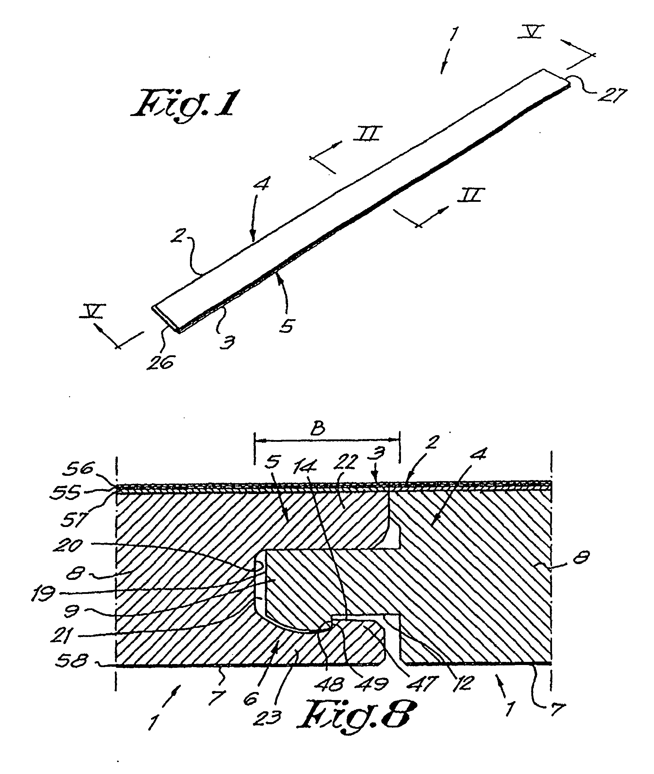

The invention relates to a floor covering which is composed of hard floor panels 1, for example, such as shown in figure 1.

These floor panels 1 can be of various shape, for example, rectangular or square, or of any other shape.

In the most preferred form of embodiment, they shall be manufactured in an elongated form, such as shown in figure 1, for example, with a length of 1 to 2 meters. The thickness, however, can also vary, but is preferably 0,5 to 1,5 cm, and more particularly 0,8 cm.

Each floor panel 1 is, at least at the edges of two opposite sides 2-3, provided with coupling parts 4-5 which allow that two adjacent floor panels 1 can be coupled to each other.

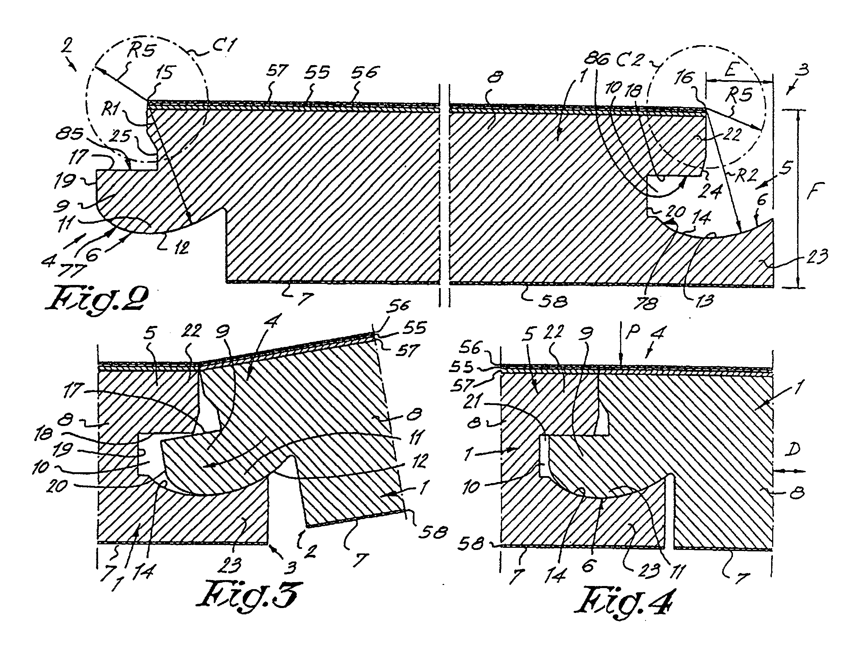

According to the invention, the coupling parts 4-5, as represented in the figures 2 to 4, are provided with integrated mechanical locking parts 6 which prevent the drifting apart of two coupled floor panels 1 into a direction D perpendicular to the respective sides 2-3 and parallel to the underside 7 of the coupled floor panels 1; the coupling parts 4-5 and the locking means 6 are realized in one piece with the core 8 of the floor panels 1; the coupling parts 4-5 have such a shape that two subsequent floor panels 1 can be engaged into each other exclusively by snapping-together and/or turning, whereby each subsequent floor panel 1 can be laterally inserted into the previous; and the coupling parts 4-5 preferably provide in an interlocking free from play according to all directions in the plane which is situated perpendicular to the aforementioned edges.

In the case of floor panels 1 with an elongated shape, as represented in figure 1, the respective coupling parts 4-5 are situated at the longitudinal sides 2-3.

The coupling parts 4-5 can be realized in various forms, although the basic forms thereof will always be formed by a tongue 9 and a groove 10.

In the form of embodiment of figures 2 to 4, the related floor panel 1 is provided with coupling parts 4-5 and locking means 6 which allow to mutually engage two floor panels 1 by means of a turning movement, without the occurance of any snap-together effect.

In the represented example, the locking means 9 consist of a first locking element 11, formed by a protrusion with a bent round shape at the lower side 12 of the tongue 9, and a second locking element 13, formed by a recess with a bent hollow shape in the lower wall 14 of the groove 10.

The locking elements 11-13 provide for that two floor panels 1 which are coupled to each other can not perform a lateral movement in the horizontal plane in respect to each other.

In order to obtain that two floor panels 1 can be inserted into each other by means of a turning movement, the curvatures preferably are circle-shaped. The bottom side 12 has a curvature with a radius R1, the center of which coincides with the related upper edge 15 of the floor panel 1, whereas the lower wall 14 shows a curvature with a radius R2 which is equal to the radius R1, but whereby its center coincides with the related upper edge 16. Radii R1 and R2 may also be applied which are larger or smaller than the distance to the upper edge 15, 16 respectively, and/or which differ from each other in size.

The upper side 17 of the tongue 9 and the upper wall 18 of the groove 10 are preferably flat and preferably are situated in the horizontal plane.

The front sides 19 and 20 of the tongue 9 and the groove 10 of two interlocked floor panels 1 preferably do not fit closely against each other, such, that in between an intermediate space 21 is created into which possible dust remainders or such can be pushed away by means of the tongue 9.

The tongue 9 and the groove 10 preferably have shapes which are complementary to each other, such that the tongue 9 in the engaged condition of two floor panels 1 precisely sits against the upper wall 18 and the lower wall 14 of the groove 10, whereby a pressure P, executed onto the upper lip 22, is received not only by this lip 22, but by the complete structure, because this pressure can be transmitted through the tongue 9 and the lower lip 23.

It is, however, clear that a number of minor deviations to these complementary forms can occur which, anyhow, have no or almost no effect upon the receipt and transmission of pressure forces. For example, a chamfer 24 and a recess 25 can be provided, as represented in figures 2 to 4, as a result of which is obtained that the subsequent floor panels 1 can easily be pushed into each other, such that no possible ridges or such render the good insertion difficult.

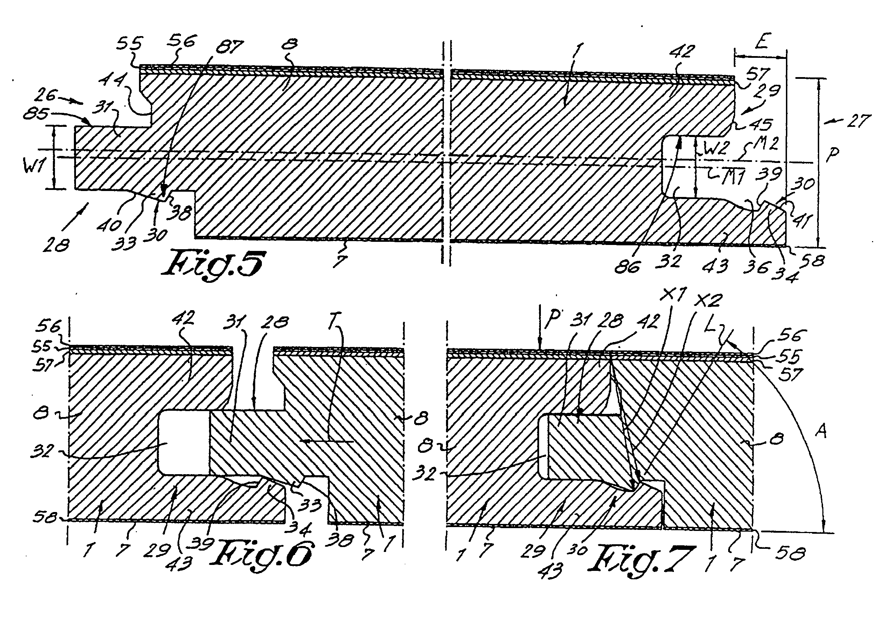

As represented in the figures 5 to 7, the floor panels 1 according to the invention can also, along the sides 26-27 which are at a right angle to the sides 2-3, be provided with coupling parts 28-29 which have locking means 30, too. The coupling parts 28-29 are preferably also realized in the shape of a tongue 31 and a groove 32. Hereby, the locking means 30 do not have to be of the same nature as the locking means 6.

Preferably, at the sides 26-27 locking means are applied which allow for an engagement and interlocking by means of a translation movement T only, as represented in figures 6 and 7. To this aim, the locking means 30 consist of a snap-together connection with locking elements 33 and 34 which grip behind each other.

As represented in figures 5 to 7, the locking element 33 preferably consists of a protrusion of the lower side 35 of the tongue 31 which can take place in a recess 36 in the lower wall 37 of the groove 32. The locking element 34 is formed by the upward directed part which limits the recess 36.

In this case, the locking elements 33-34 have contact planes 38-39 which are parallel to each other and preferably extend in an inclined manner, according to a direction which simplifies the snapping-together. The tangent line L which is determined by the contact planes 38-39, hereby forms an angle A with the underside 7 which is smaller than 90°.

The locking elements 33-34 preferably are provided with inclined portions 40 and 41 which, when engaging two floor panels 1, cooperate with each other in such a manner that the locking elements 33-34 can easily be pushed over each other until they grip behind each other by means of a snap-together effect.

The thickness W1 of the tongue 31 preferably is equal to the width W of the groove 32, such that the upper lip 42, when exerting a pressure P, is supported by the tongue 31 which, in its turn, then is supported by the lower lip 43.

Analogous to the chamfer 24 and recess 25, a recess 44 and a chamfer 45 are provided also at the edges 28-29.

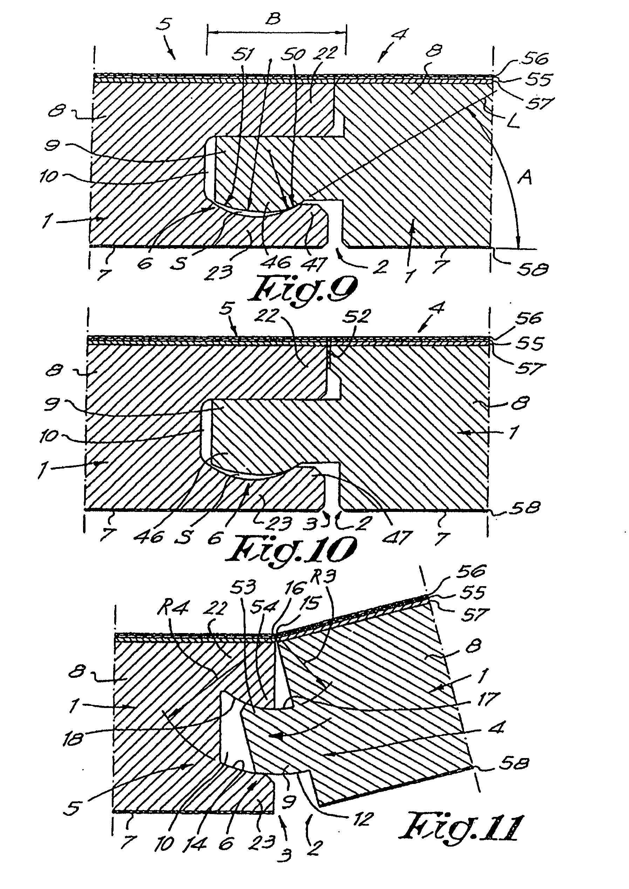

It is noted that such a snap-together coupling can also be applied at the edges 2-3. Hereby, this can be a snap-together coupling analogous to these of figures 5 to 7, but this can also be a snap-together coupling whereby other forms of coupling parts are applied, for example, such as represented in figures 8 and 9. Contrary to the locking elements 33-34 which consist of rather local protrusions, in the forms of embodiment of figures 8 and 9 use is made of locking elements 46-47 which, in comparison to the total width B of the coupling, extend over a rather large distance.

In this case, the locking elements 46-47 are also provided at the lower side 12 of the tongue 9 and the lower wall 14 of the groove 10.

According to figure 8, the locking elements 46-47 have contact surfaces 48-49 which are at an angle with the plane of the floor panel 1. Hereby, a coupling is obtained which is interlocked in a particularly fixed manner.

As represented in figure 9, the locking elements 46-47 possibly can be realized in such a manner that substantially only a linear contact is obtained, for example, because the contact surfaces directed towards each other are realized with different curvatures.

The surfaces, directed towards each other, of the locking elements 46-47 hereby consist of bent surfaces. The tangent line L forms an angle A which is smaller than 90°, and even better is smaller than 70°.

Hereby, the locking element 46 preferably has two portions with a different curvature, on one hand, a portion 50 with a strong curvature and, on the other hand, a portion 51 with a weak curvature. The portion 50 with the strong curvature provides for the formation of a firm coupling. The portion 51 with the weak curvature allows that the coupling parts 4-5 can be brought into each other easily. The intermediate space S forms a chamber which offers space for dust and similar which, when engaging two floor panels 1, gets there eventually.

In the case of a snap-together connection, for example, a connection, such as represented in figures 7 to 9, preferably always the tongue 9-31 has a shape, thickening towards below, which can cooperate with a widened portion in the groove 10.

In figure 10, a variant is represented whereby at least at the height of the upper edges 15-16, a sealing material 52 is provided, as a result of which a watertight sealing can be guaranteed. This sealing material 52 may consist of a strip or covering which is provided previously at the floor panel 1, either at one or both upper edges 15-16.

In figure 11, a further variant is represented, whereby the locking means 6 are formed by an upward directed portion 53 at the tongue 9 which, as a result of a turning movement, is brought behind a downward-directed portion 54 at the upper wall 18. More particularly, this is obtained by realizing the upper side 17 and the upper wall 18 with a curvature R3, the center of which is situated at the edges 15-16, and realizing the lower side 12 and the lower wall 14 with a radius R4, the center of which is also situated at the upper edges 15 and 16, respectively. These radii R3-R4 can be chosen otherwise, too.

In general, according to the invention, the difference between, on one hand, the radius R1, R3 respectively, and, on the other hand, the radius R2, R4 respectively, preferably should not be larger than 2 mm.

It is also preferred that the center of these radii is situated inside the circle C1, C2 respectively, which extends with a radius R5 of 3 mm around the upper edge 15, 16 respectively, such as, for example, indicated in figure 2.

Finally is noted that, according to the invention, the lower lip 23-43, as represented in figures 2 to 7, can be realized longer than the upper lip 22-42. This has as an advantage that the coupling parts 4-5-28-29 can be realized in an easier manner by means of a milling cutter or such. Furthermore, this simplifies the engagement of two floor panels 1, because each subsequent floor panel 1 during installation can be placed upon the protruding lower lip 23-43, as a result of which the tongue 9-31 and the groove 10-32 automatically are positioned in front of each other.

The embodiments whereby the lower lip 23 is equal to or shorter than the upper lip 22, in their turn, offer the advantage that no protruding lip 23 remains at the extreme edge of the floor which might cause problems in the finishing.

In order to allow for a smooth assembly, in order to guarantee the necessary stability and firmness and in order to limit the quantity of material to be cut away, the difference E between the upper lip 22-42 and the lower lip 23-43, measured in the plane of the floor panel and perpendicular to the longitudinal direction of the groove 10, should preferably be kept smaller than one time the total thickness F of the floor panel 1. For stability's sake, normally this total thickness F shall never be less than 5 mm.

The small dimension of the difference E offers the advantage that the lower lip must not be strengthened by a reinforcement.strip or the like.

According to a particular form of embodiment, the central line M1 through the tongue 9 and the groove 10 is situated lower than the center M2 of the floor panel 1, such, that the upper lip 22-42 is thicker than the lower lip 23-43. In first instance, this is essential in this kind of connections, because then it is the lower lip 23-43 which bends, such that the upper side of the floor panel 1 is kept free of possible deformations.

As explained in the introduction, for the core 8 a material is chosen from the following series:
- a ground product which, by means of a binding agent or by means of melting together, is composed to a single compound;
- a product based on synthetic material;
- chip board with fine chips.

The invention shows its usefulness, in first instance, preferably with laminated flooring, due to the reasons explained in the introduction.

As represented in the examples of the figures 2 to 11, such laminated flooring preferably consists of a core 8 made of MDF board, HDF board or similar, whereby at least at the upper side of this core 8 one or more layers of material are provided.

More particularly, it is preferred that the laminated flooring is provided with a decorative layer 55 and a protective top layer 56. The decorative layer 55 is a layer, impregnated with resin, for example, made of paper, which can be imprinted with a variety of patterns, such as a wood pattern, a pattern in the form of stone, cork, or similar or even with a fancy pattern. The protective top layer 56 preferably also consists of a layer saturated with resin, for example, melamine resin, made of a transparent material.

It is clear that still other layers can be applied, such as an intermediate layer 57 upon which the decorative layer 55 is provided.

Preferably, also a backing layer 58 shall be applied at the underside 7, forming a counterbalancing element for the top layers and, thus, guaranteeing the stability of the form of the floor panel 1. This backing layer 58 may consist of a material, for example paper, impregnated with a resin, for example, a melamine resin.

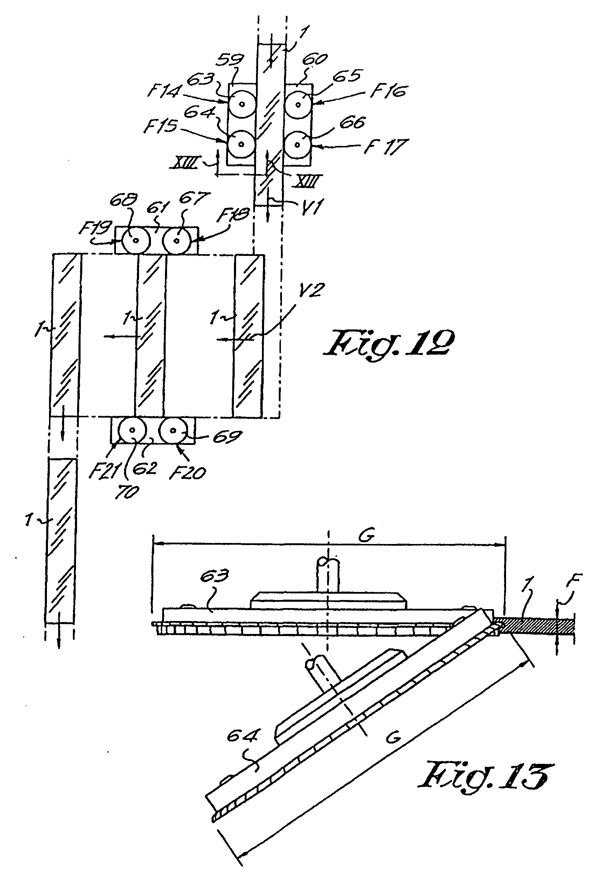

As represented schematically in figure 12, the tongue 9 and the groove 10, and preferably also the tongue 31 and the groove 32 are applied by means of a milling process. In the case that a profile has to be applied on all four sides, the floor panels 1 preferably shall be displaced by means of two perpendicular movements V1 and V2, whereby during the first movement profiles at two opposite edges are provided, in this case the longitudinal edges, by means of milling devices 59-60, whereas during the second movement profiles are provided at the other edges, in this case the small edges, by means of milling devices 61-62. During these processing, the floor panels 1 preferably are put with their decorative layer directed downward.

According to an important characteristic of the invention, each respective tongue 9-31 and groove 10-32 are realized by means of a milling process with at least two subsequent milling cycles by means of milling cutters which are positioned at different angles in reference to the related floor panel 1.

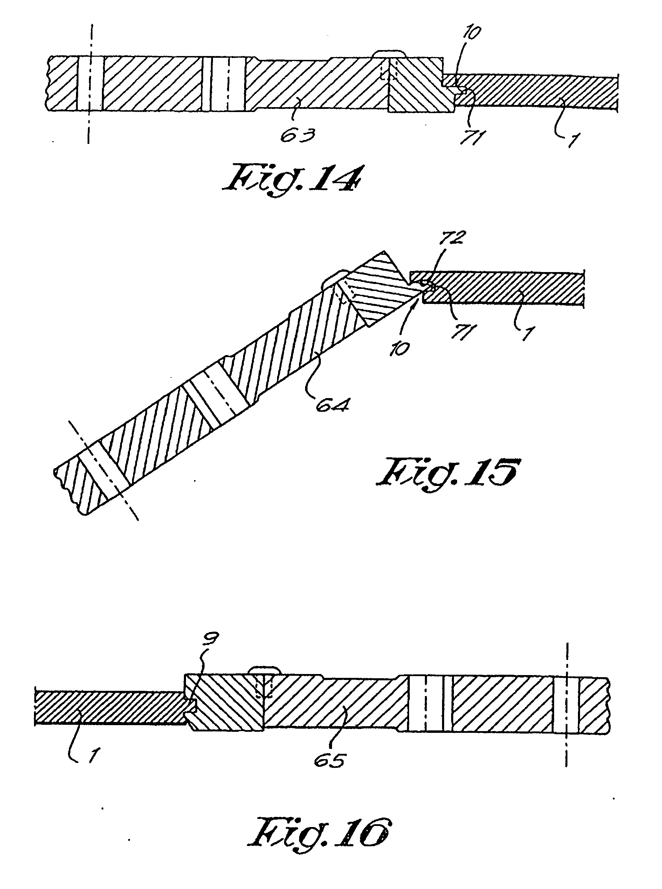

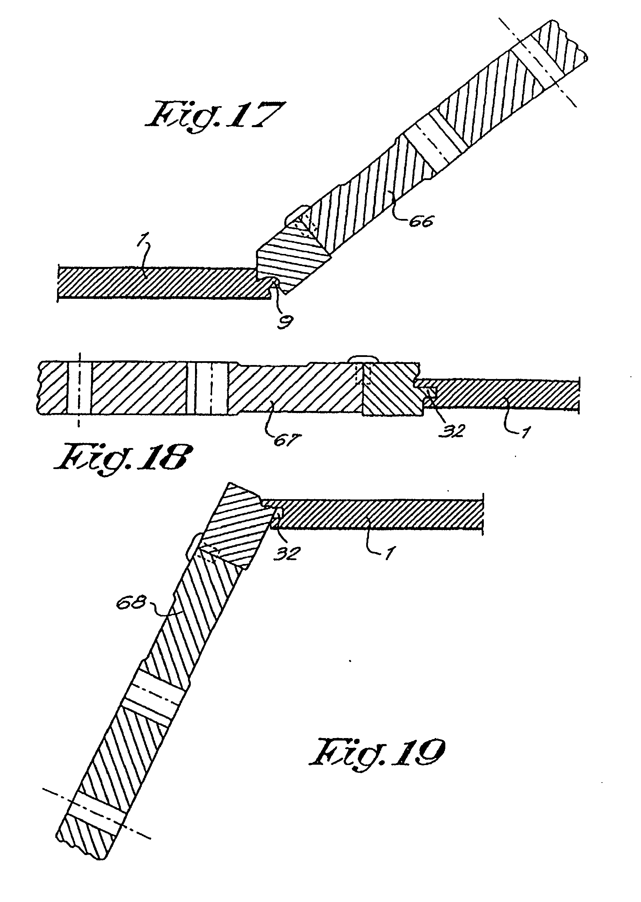

This is illustrated in figures 13, 14 and 15, wherein it is represented how a groove 10 is realized by means of two milling cycles by means of two milling cutters 63 and 64. Figures 16 and 17 represent how the tongue 9 is realized by means of milling cutters 65 and 66.

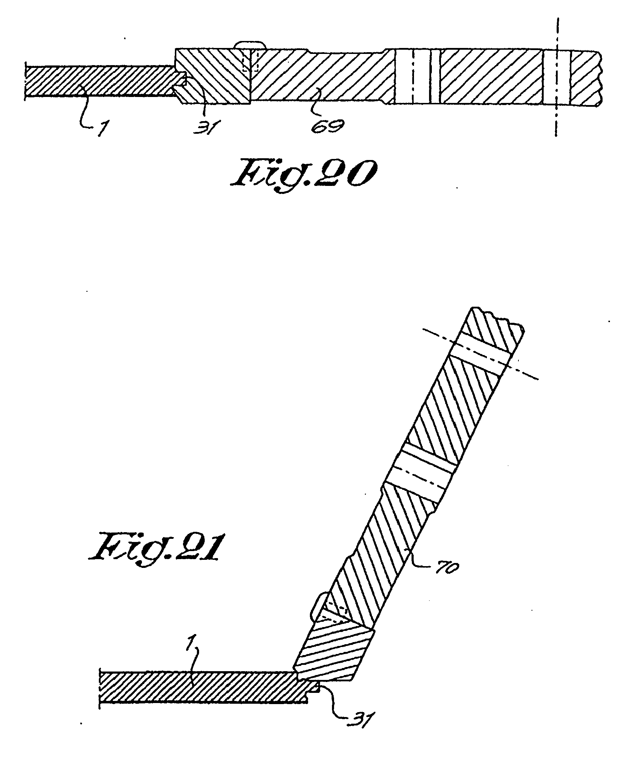

The figures 18-19 and 20-21 represent similar views showing how the groove 32 and the tongue 31 are realized by means of milling cutters 67-68 and 69-70, positioned at an angle.

During each of the aforementioned milling cycles, each time substantially the final shape of one flank is realized. For example, the milling cutter 63 of figure 14 determines the final shape of the lower flank 71 of the groove 10, whereas the milling cutter 64 determines the final shape of the upper flank 72.

As mentioned in the introduction, preferably milling cutters 63 to 72 shall be applied, having diameters G which are at least 5 times, and even better at least 20 times larger than the thickness F of the floor panels 1.

Apart of the mentioned milling cutters, preferably still other milling cutters are applied, for example, in order to remove a part of the material to be removed already during a first premachining cycle.

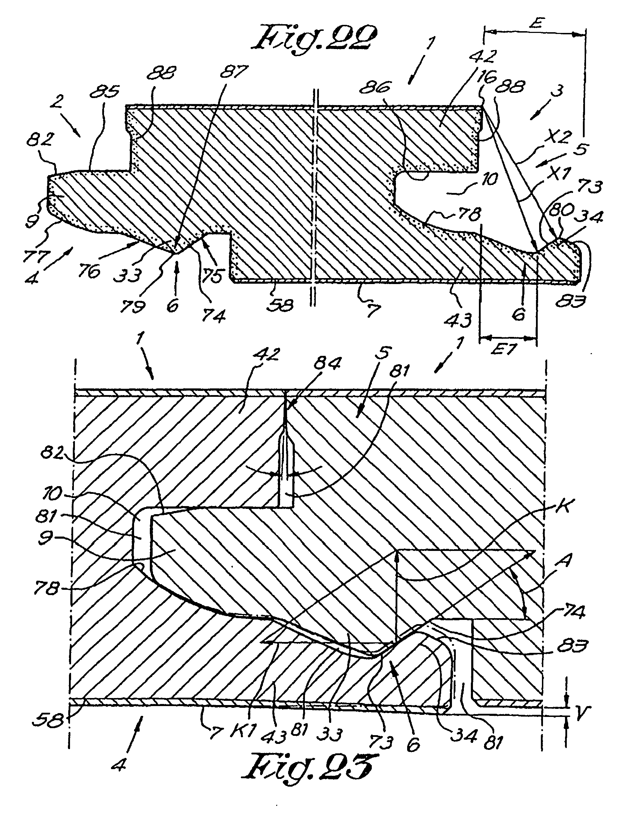

In the figures 22 to 25, a particularly preferred form of embodiment of a floor panel 1 according to the invention is represented. Hereby, the parts which are taken over from the aforegoing forms of embodiment are indicated with corresponding references.

An important characteristic herein consists in that the coupling parts 4-5 are provided with locking means 6 which, in engaged condition, exert a tension force upon each other, as a result of which the engaged floor portions 1 are forced towards each other. As represented, this is realized preferably by providing the coupling parts with an elastically bendable portion, in this case the lip 43, which, in engaged condition, is at least partially bent and in this way creates a tension force which provides for that the engaged floor panels 1 are forced towards each other. The hereby resulting bending V, as well as the tension force K resulting herefrom, are indicated in the enlargement of figure 23.

In order to obtain that the tension force K results in pressing together the engaged floor panels 1, the bendable portion, in this case the lip 43, preferably is provided, as represented, with an inwardly inclined contact surface 73 which preferably can cooperate with a corresponding contact surface 74. These contact surfaces 73-74 are similar to the aforementioned contact surfaces 39-38 and also similar to the inclined portions of the lower lip of figures 2 to 4.

In the figures 2 and 5, the portions form complementary matching shapes; it is, however, clear that, by a modification, also a tension effect similar as in figure 23 can be realized.

Due to, on one hand, the contact under the angle A, and, on the other hand, the fact that a tension force K is created, a force component K1 is effected, as a result of which the floor panels 1 are drawn against each other.

Preferably, the angle A of the contact surfaces 73-74 in respect to the horizontal plane is situated between 30 and 70 degrees. In first instance in the case that use is made of the embodiment whereby a tension force K is realized, an angle A of 30 to 70 degrees is ideal in order, on one hand, to effect an optimum pressing-together of the floor panels 1 and, on the other hand, to obtain that the floor panels 1 can easily be engaged, respectively disassembled.

Although the pressing force K1 preferably is delivered by the aforementioned lip 43, the invention does not exclude other forms of embodiment whereby this force is delivered by other bendable portions.

It is noted that the bending V is relatively small, for example, several hundredths up to several tenths of a millimeter, and does not have an influence upon the placement of the floor covering. Furthermore is noted that such floor covering generally is placed upon an underlayer which is elastically compressible, as a result of which the bending V of the lip 43 exclusively results in the fact that the underlayer locally is compressed somewhat more.

Due to the fact that the lip 43 is bent apart and that it remains somewhat bent apart in engaged position, also the advantage is effected that, when exerting a pressure upon the floor covering, for example, when placing an object thereupon, the pressing-together force is enhanced and, thus, the development of gaps is counteracted even more.

It is noted that the inventor has found that, contrary to all expectations, an ideal tension force can be realized by manufacturing the coupling parts 4-5, including the locking elements 33-34, and preferably the complete core 8, of HDF board or MDF board, although these materials only allow a minor elastic deformation.

HDF and MDF also offer the advantage that smooth surfaces are obtained, as a result of which the locking elements can be moved easily over each other.

According to a variant of the invention, the tension force can also be delivered by means of an elastic compression of the material of the coupling parts, to which end these coupling parts, and preferably the complete core 8, then have to be manufactured in an elastically compressible material.

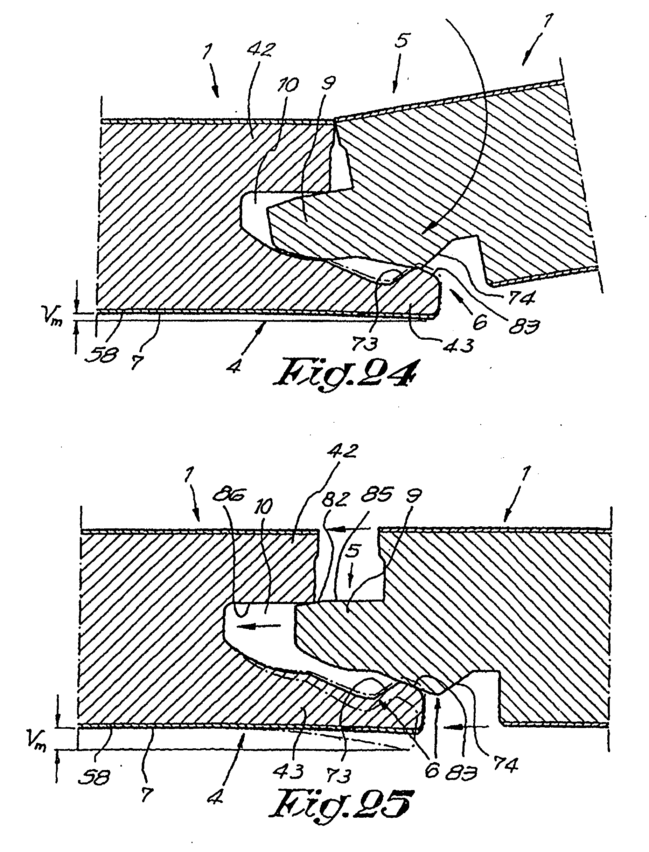

A further particular characteristic of the embodiment of figures 22 to 25 consists in that the floor panels 1 can be engaged by means of a turning movement, as represented in figure 24, as well as by means of shifting them towards each other, as represented in figure 25, preferably in such a manner that, during the engagement by means of the turning movement, a maximum bending Vm results in the coupling parts, more particularly in the lip 43, which bending Vm is less pronounced, if not non-existent, as in the figures 2 to 4, in comparison to the bending Vm which results when the floor panels 1 are engaged by means of shifting them towards each other.

The advantage of this consists in that the floor panels 1 can be engaged easily by means of a turning movement, without necessitating a tool therefore, whereas it still remains possible to engage the floor panels also by means of shifting them. This latter is useful, in first instance, when the last panel has to be placed partially under a door frame or similar. In this case, the floor panel 1 can be pushed under the door frame with the side which does not have to be engaged and subsequently, possibly by means of tools, can be snapped into the adjacent floor panel 1.

It is noted that the shapes of the coupling parts 4-5 shown in figures 22 to 25 can also be used for the coupling parts 28-29 of the short sides.

According to the invention, in the case that the four sides 2-3-26-27 are provided with coupling parts 4-5-28-29, these coupling parts can be realized in such a manner that in one direction a firmer engagement than in the other direction is effected. In the case of elongated floor panels 1, for example, such as represented in figure 1, the locking at the small sides 26-27 preferably shall be more pronounced than at the longitudinal sides 2-3. The length of the coupling at the small sides, namely, is smaller and, in principle, less firm. This is compensated by providing in a more pronounced locking.

This difference in engagement can be obtained by realizing the contact surfaces 73-74 under different angles.

Preferably, the aforementioned protrusion, more particularly the locking element 33, is bordered by at least two portions 75-76, respectively a portion 75 with a strong inclination which provides for the locking, and a portion 76 with a weaker inclination which renders the engagement of the coupling parts easier. In the embodiment of figures 22 to 25, these portions 75-76 are formed by straight planes, but, as already described in reference to figure 9, use can also be made of curved portions 50-51. In figure 5, these are the contact surface 38 and the inclined portion 40.

In the preferred form of embodiment, the floor panels 1 according to the invention comprise coupling parts 4-5 and/or 28-29 showing one of the following or the combination of two or more of the following features:
- a curvature 77 at the lower side of the tongue 9 and/or a curvature 78 at the lip 43 which form a guidance when turning two floor panels 1 into each other, with the advantage that the floor panels 1 can be engaged into each other easily during installing;
- roundings 79-80 at the edges of the locking elements 33-34, with the advantages that the locking elements can easily shift over each other during the engagement, respectively disassembly of the floor panels 1 and that the locking elements are not damaged, for example, crumble away at their edges, even if the floor panels are engaged, respectively disassembled, repeatedly;
- dust chambers 81, or spaces 21 as in figure 4, between all sides, directed laterally towards each other, of the engaged floor panels 1, with the advantage that inclusions which get between the floor panels 1 during the engagement do not exert a disadvantageous influence upon the good engagement;
- a shaping of the tongue 9 which is such, for example, by the presence of a chamfer 82, that the upper side of the tongue 9 already with the first contact becomes situated under the lower side of the upper lip 42 when the floor panels 1 are pushed towards each other at the same level, as indicated in figure 25, with the advantage that the front extremity of the tongue 9 does not press against the front side of the upper lip 42 when the floor panels are pushed towards each other at the same level;
- a ramp surface 83, hereinbefore also called inclined portion 41, formed at the free extremity of the lower lip 43, with the advantage that the locking elements 33-34 shift smoothly over each other and that the lower lip 43 is bent uniformly;
- in the engagement direction only one important contact point which is formed by a section 84 at the location of the top side of.the floor panels 1, with the advantage that the aforementioned tension force is optimally transferred to the upper side of the floor panels 1 and that the development of openings between the floor panels 1 is counteracted;
- contact surfaces 85-86, more particularly abutment surfaces, formed by the upper side of the tongue 9 and the upper side of the groove 10 which, over the largest portion of their length, run parallel to the plane which is defined by the floor panels 1, as well as contact surfaces cooperating with each other, formed by curvatures 77-78, with the advantage that no mutual displacement in height between two engaged floor panels 1 is possible, even if the insertion depth of the tongue 9 into the groove 10 should vary due to which causes whatsoever, in other words, that no height differences may occur between the adjacent floor panels.

In the form of embodiment of figures 22 to 25, all these characteristics are combined; it is, however, clear that, as becomes evident from figures 2 to 11, these features can also be present separately or in a limited combination.

As becomes evident from figures 5 to 7 and 22 to 25, an important characteristic of the preferred form of embodiment of the invention consists in that the locking means 6, in other words, the portion providing for the snap-together and engagement effect, are situated in that portion of the lower lip 23-43 which extends beyond the upper lip 22-42, more particularly, that the lowermost point 87 of the locking part 33 is situated under the top layer of the floor panel 1. For clarity's sake, this top layer is indicated in the figures 22 to 25 only as a single layer.

It is noted that the combination of features, that the lower lip 23-43 extends further than the upper lip 22-42, that the locking means 6 are formed at least by means of a portion which inwardly slopes downward, and that this portion, at least partially, is located in the portion of the lower lip 23-43 which extends beyond the upper lip 22-42, is particularly advantageous, among others, in comparison with the couplings for floor panels described in the documents WO 94/01628, WO 94/26999, WO 96/27719 and WO 96/27721. The sloping portion offers the advantage that the floor panels 1 can be disassembled again. The fact that this sloping portion is situated in the further extending portion of the lower lip 23-43 additionally to this offers the advantage that no deformations can occur during coupling which manifest themselves up to the top layer.

According to a preferred characteristic of the invention, the aforementioned portion, i.e. the contact surface 39 or 73, preferably extends in such a manner that the distance up to the upper edge 16 diminishes from below in upward direction, in other words, such that, as represented in figure 22, the distance X2 is smaller than the distance X1. This is also the case in figure 7.

Still preferably, this portion only starts at a clear distance E1 from the upper lip 42.

It is obvious that the coupling parts 22 to 25 can also be realized by means of said milling process.

According to a particular characteristic of the invention, the floor panels 1 are treated at their sides 2-3 and/or 26-27 with a surface densifying agent, more particularly a surface hardening agent, which preferably is chosen from the following series of products: impregnation agents, pore-sealing agents, lacquers, resins, oils, paraffines and similar.

In figure 22, such impregnation 88 is represented schematically. This treatment can be performed over the complete surface of the sides 2-3 and/or 26-27 or only over well-defined portions hereof, for example, exclusively the surfaces of the tongue 9 and the groove 10.

The treatment with a surface densifying agent offers, in combination with the snap-together effect, the advantage that in various aspects better coupling features are obtained. As a result of this, the coupling parts 4-5 and/or 28-29 better keep their shape and strength, even if the floor panels 1 are engaged and disassembled repeatedly. Especially in the case that for the core 8 use is made of HDF, MDF or similiar, by means of this treatment such a better quality of surface condition is obtained, that no abrasion of material occurs during engaging, respectively during disassembling.

This treatment also offers the advantage that, at least in the case of a surface hardening, the aforementioned elastic tensioning effect is enhanced.

The present invention is in no way limited to the forms of embodiment described by way of example and represented in the figures, however, can such floor covering and the pertaining floor panels 1 be realized in various forms and dimensions without leaving the scope of the invention.

For example, the various characteristics which are described by means of the represented forms of embodiment, may be combined with each other or not.

Furthermore, all embodiments of coupling elements described before can be applied at the longer side as well as at the shorter side.

Further, apart from the subject matter described in the appended claims, and as is clear from the content of the description, the invention also relates to several other aspects, for instance as listed below:
- according to a 1^{st} aspect, a floor covering, consisting of hard floor panels (1) which, at least at the edges of two opposite sides (2-3, 26-27), are provided with coupling parts (4-5, 28-29), cooperating with each other, substantially in the form of a tongue (9-31) and a groove (10-32), whereby the coupling parts (4-5, 28-29) are provided with integrated mechanical locking means (6), which coupling parts and locking means prevent the drifting apart of two coupled floor panels (1) into a direction (R) perpendicular to the related edges (2-3, 26-27) and parallel to the underside (7) of the coupled floor panels (1), **characterized in that** said floor panels (1) show the further features:
   - that the floor panels (1) are rectangular laminated floor panels (1);
   - that coupling parts as defined above are provided at all four sides;
   - that the coupling parts (4-5, 28-29) and the locking means (6) are realized in one piece with the floor panels (1) themselves, more particularly in one piece with the core (8) of the floor panels (1); and
   - that said groove at its lower side is bordered by a lip, more particularly a lower lip (23-43), which lip over its complete thickness is structurally made out of the material of the floor panel itself.
- according to a 2^{nd} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by means of a turning movement, whereas the coupling parts at the edges of the second pair of opposite sides are realized in such a manner that the floor panels (1), from a position in which the edges are positioned along each other, can also be engaged at least by means of a turning movement.
- according to a 3^{rd} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by means of a turning movement, whereas the coupling parts at the edges of the second pair of opposite sides are realized in such a manner that the floor panels (1), from a position in which the edges are positioned along each other, can be engaged only by means of a turning movement.

- according to a 9^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged only by means of a turning movement, whereas the coupling parts at the edges of the second pair of opposite sides are also realized in such a manner that the floor panels (1), from a position in which the edges are positioned along each other, can be engaged only by means of a turning movement.
- according to a 5^{th} aspect, a floor coverings in accordance with said 1^{st} aspect, further **characterized in that** the coupling parts at the edges of a first pair of opposite sides are realized in such a manner that the floor panels (1), from a position in which the edges are positioned along each other, can be engaged at least by means of a turning movement, whereas the coupling parts at the edges of the second pair of opposite sides are realized in such a manner that the floor panels (1), from a position in which the edges are positioned along each other, can be engaged at least by shifting them towards each other.
- according to a 6^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged only by means of a turning movement, whereas the coupling parts at the edges of the second pair of opposite sides are realized in such a manner that the floor panels (1), from a position in which the edges are positioned along each other, can be engaged at least by shifting them towards each other.

- according to a 7^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by shifting them towards each other, whereas the coupling parts at the edges of the second pair of opposite sides are realized in such a manner that the floor panels (1), from a position in which the edges are positioned along each other, can be engaged also at least by shifting them towards each other.
- according to an 8^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by means of a turning movement, whereas the coupling parts at the edges of the second pair of opposite sides are realized in such a manner that the floor panels (1), from a position in which the edges are positioned along each other, can be engaged only by shifting them towards each other.

- according to a 9^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged only by means of a turning movement, whereas the coupling parts at the edges of the second pair of opposite sides are realized in such a manner that the floor panels (1), from a position in which the edges are positioned along each other, can be engaged only by shifting them towards each other.
- according to a 10^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by shifting them towards each other, whereas the coupling parts at the edges of the second pair of opposite sides are realized in such a manner that the floor panels (1), from a position in which the edges are positioned along each other, can be engaged only by shifting them towards each other.
- according to an 11^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged only by shifting them towards each other, whereas the coupling parts at the edges of the second pair of opposite sides are realized in such a manner that the floor panels (1), from a position in which the edges are positioned along each other, can also be engaged only by shifting them towards each other.

- according to a 12^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by means of a turning movement, whereas the coupling parts at the edges of the second pair of opposite sides are realized in such a manner that the floor panels (1), from a position in which the edges are positioned along each other, can be engaged by means of a turning movement as well as by shifting them towards each other.
- according to a 13^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged only by means of a turning movement, whereas the coupling parts at the edges of the second pair of opposite sides are realized in such a manner that the floor panels (1), from a position in which the edges are positioned along each other, can be engaged by means of a turning movement as well as by shifting them towards each other.

- according to a 14^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged at least by shifting them towards each other, whereas the coupling parts at the edges of the second pair of opposite sides are realized in such a manner that the floor panels (1), from a position in which the edges are positioned along each other, can be engaged by means of a turning movement as well as by shifting them towards each other.
- according to a 15^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged only by shifting them towards each other, whereas the coupling parts at the edges of the second pair of opposite sides are realized in such a manner that the floor panels (1), from a position in which the edges are positioned along each other, can be engaged by means of a turning movement as well as by shifting them towards each other.
- according to a 16^{th} aspect, a floor covering in accordance with said 1^{st} aspect, further **characterized in that** the coupling parts at the edges of a first pair of opposite sides are realized in such a manner that the floor panels (1), from a position in which the edges are positioned along each other, can be engaged by means of a turning movement as well as by shifting them towards each other, whereas the coupling parts at the edges of the second pair of opposite sides are realized in such a manner that the floor panels (1), from a position in which the edges are positioned along each other, can also be engaged by means of a turning movement as well as by shifting them towards each other.

- according to a 17^{th} aspect, a floor covering in accordance with said 1^{st} aspect, further **characterized in that** the coupling parts of at least one pair of opposite edges are realised in such a manner that the floor panels (1), from a position in which such edges are positioned along each other, can be engaged at least by means of a turning movement.
- according to an 18^{th} aspect, a floor covering in accordance with said 17^{th} aspect, further **characterized in that** the coupling parts at said pair of opposite edges are realized in such a manner that the floor panels (1), from a position in which the edges are positioned along each other, can be engaged only by means of a turning movement.
- according to a 19^{th} aspect, a floor covering in accordance with said 1^{st} aspect, further **characterized in that** the coupling parts of at least one pair of opposite edges are realised in such a manner that the floor panels (1), from a position in which such edges are positioned along each other, can be engaged at least by shifting them towards each other.

- according to a 20^{th} aspect, a floor covering in accordance with said 19^{th} aspect, further **characterized in that** the coupling parts of said pair of opposite edges are realized in such a manner that the floor panels (1), from a position in which the edges are positioned along each other, can be engaged only by shifting the panels (1) towards each other.
- according to a 21^{st} aspect, a floor covering in accordance with said 1^{st} aspect, further **characterized in that** the coupling parts of at least one pair of opposite edges are realised in such a manner that the floor panels (1), from a position in which such edges are positioned along each other, can be engaged by means of a turning movement, as well as by shifting them towards each other.
- according to a 22^{nd} aspect, a floor covering in accordance with any of said 17^{th} to 21^{st} aspect, further **characterized in that** instead of a locking in two directions at both pairs of edges there is only such locking at one pair of edges.
- according to a 23^{rd} aspect, a floor covering in accordance with any of said preceding aspects, further **characterized in that** one side of the panels (1) is longer than the other, and in that the first pair of opposite edges is formed by the edges of the longer sides, whereas the second pair of opposite edges is formed by the edges of the shorter sides.
- according to a 29^{th} aspect, a floor covering in accordance with any of said 1^{st} to 22^{nd} aspect, further **characterized in that** one side of the panels (1) is longer than the other, and in that the first pair of opposite edges is formed by the edges of the shorter sides, whereas the second pair of opposite edges is formed by the edges of the longer sides.
- according to a 25^{th} aspect, a floor covering in accordance with any of said preceding aspects, further **characterized in that** the coupling parts of at least one edge comprise a tongue having a locking element (11) formed by a protrusion with a bent round shape at the lower side (12) of the tongue (9) and at the opposite edge a groove provided with a second locking element (13), formed by a recess with a bent hollow shape in the lower wall (14) of the groove (10).
- according to a 26^{th} aspect, a floor covering in accordance with said 25^{th} aspect, further **characterized in that** the protrusion and the recess are circle-shaped, whereby, when the coupling parts allow to turn the panels (1), the circle-shaped protrusion and recess provide a hinge-like effect.
- according to a 27^{th} aspect, a floor covering in accordance with said 25^{th} or 26^{th} aspect, further **characterized in that** the tongue (9) and groove (10) have complementary forms.
- according to a 28^{th} aspect, a floor covering in accordance with said 25^{th} to 27^{th} aspect, further **characterized in that** the lip bordering the lower side of the groove (10) extends beyond the lip bordering the upper side of the groove (10) and in that the recess is located partially under the lip bordering the upper side of the groove and partially in the portion of the lip bordering the lower side of the groove which is located beyond the lip bordering the upper side of the groove.
- according to a 29^{th} aspect, a floor covering, consisting of hard floor panels (1), said panels (1) being realized as laminated flooring, comprising a wood-based core (8), consisting of a ground wood product which, together with a binding agent is composed to a single compound and/or is made of chip board with fine chips, whereby on this core (8) one or more layers are provided, among which a decorative layer (55), whereby a backing layer (58) is provided at the underside (7), and whereby the panels (1) at least at the edges of two opposite sides (2-3, 26-27), are provided with coupling parts (4-5, 28-29), co-operating with each other, substantially in the form of a tongue (9-31) and a groove (10-32), **characterized in that** the coupling parts are provided with integrated mechanical locking means (6) made in one piece with the panels (1), whereby the coupling parts and locking means prevent the drifting apart of two coupled floor panels (1) into a direction (R) perpendicular to the related edges (2-3, 26-27) and parallel to the underside (7) of the coupled floor panels (1), and whereby said locking means (6) are obtained by means of said tongue and groove in that the tongue is provided with an upward directed portion (53), whereas the upper wall (18) of the groove is provided with a downward directed portion (54).

- according to a 30^{th} aspect, a floor covering in accordance with said 29^{th} aspect, further **characterized in that** the groove is limited by an upper and a lower lip (23) of substantially the same length.
- according to a 31^{st} aspect, a floor covering in accordance with said 29^{th} or 30^{th} aspect, further **characterized in that** the tongue and groove are circularly curved.
- according to a 32^{nd} aspect, a floor covering, consisting of hard floor panels (1) having a wood-based core (8), said panels (1) being provided, at least at the edges of two opposite sides, with coupling parts formed in one piece with said wood-based core (8) and co-operating with each other, substantially in the form of a tongue and a groove, **characterized in that** the coupling parts are provided with integrated mechanical locking means, also made in one piece with said core (8), whereby the coupling parts and locking means prevent the drifting apart of two coupled floor panels (1) in a direction perpendicular to the related edge and parallel to the underside of the coupled floor panels (1), and in that said wood-based core (8) consists of HDF board or MDF board.
- according to a 33^{rd} aspect, a floor covering in accordance with said 32^{nd} aspect, further **characterized in that** the panels (1) are provided with one or more resin based layers (55-56-57-58) applied to said core (8) of HDF board or MDF board and for the tongue (9-31) and groove (10-32) have milled profiles which are threated with a surface densifying agent, more particularly a surface hardening agent.
- according to a 34^{th} aspect, a floor covering in accordance with said 32^{th} or 33^{th} aspect, further **characterized in that** the panels (1) are rectangular and at both pairs of opposed edges are provided with said coupling parts.
- according to a 35^{th} aspect, a floor covering, consisting of hard floor panels (1), said panels (1) being provided, at least at the edges of two opposite sides, with coupling parts co-operating with each other, substantially in the form of a tongue and a groove, whereby the coupling parts are provided with integrated mechanical locking means, which coupling parts and locking means prevent the drifting apart of two coupled floor panels (1) in a direction perpendicular to the related edge and parallel to the underside of the coupled floor panels (1), **characterized in that** the panels (1) comprise a wood-based core (8), in that the coupling means comprise a recess in the upper side of the lower lip (43) bordering the underside of the groove, in that the recess at the inner side of the panel is bordered by a portion which is inclined and in that said inclined portion connects to the lower surface of the groove.
- according to a 36^{th} aspect, a floor covering in accordance with said 35^{th} aspect, further **characterized in that** the portion of the lower surface of the groove connected to the inclined surface of the recess consists of a curvature (78);

- according to a 37^{th} aspect, a floor covering, consisting of hard floor panels (1), said panels (1) being provided, at least at the edges of two opposite sides, with coupling parts co-operating with each other, substantially in the form of a tongue and a groove, whereby the coupling parts are provided with integrated mechanical locking means, which coupling parts and locking means prevent the drifting apart of two coupled floor panels (1) in a direction perpendicular to the related edge and parallel to the underside of the coupled floor panels (1), **characterized in that** the coupling means comprise a recess in the upper side of the lower lip (23-43) bordering the underside of the groove, and in that the coupling means are provided with a guidance in the form of a curvature (77-78) provided at the portion of the upperside of the lower lip (23-43) between the recess and the inside of the groove and/or at the lower side of the tongue.
- according to a 38^{th} aspect, a floor covering in accordance with said 37^{th} aspect, further **characterized in that** the tip of the tongue (9) at its upper side is provided with a chamfer (82).
- according to a 39^{th} aspect, a floor covering in accordance with said 37^{th} or 38^{th} aspect, further **characterized in that** said curvatures (77 and/or 78) allow to fit the tongue in the groove (10) without any substantial forces to be exerted on the tongue (9).
- according to a 40^{th} aspect, a floor covering consisting of hard floor panels (1), said panels (1) being realized as laminated flooring, comprising a wood-based core (8), consisting of a ground wood product which, together with a binding agent is composed to a single compound and/or is made of chip board with fine chips, whereby on this core (8) one or more layers are provided, among which a decorative layer (55) and whereby a backing layer (58) is provided at the underside (7), which panels (1) are intended to be laid to provide an upwardly facing, flat surface lying in a first horizontal plane and a downwardly facing, substantially flat surface lying in a second horizontal plane, said hard floor panels (1) being provided, at least at the edges of two opposite sides (2-3, 26-27), with coupling parts (4-5, 28-29) formed in one piece with said wood-based core (8) and co-operating with each other, substantially in the form of a tongue (9-31) and a groove (10-32), said groove being at least delimited by an upper lip (22-42) terminating at a vertical plane and lower lip (23-43), and said tongue having a tongue portion extending from the tongue tip inwardly up to said vertical plane when said panels (1) are joined, wherein :
- the lower lip extends beyond the upper lip (22-42);
- the coupling parts are provided with integrated mechanical locking means (6) made in one piece with said core (8), which coupling parts and locking means prevent the drifting apart of two coupled floor panels (1) in a direction perpendicular to the related edge and parallel to the underside of the coupled floor panels (1);
- said integrated mechanical locking means comprise on the one hand a protrusion (33) located on the lower surface (35) of said tongue, said protrusion extending at least partially beyond said vertical plane inwardly and said protrusion having a contact surface (38,74), and on the other hand a recess (36) in the lower lip for accommodating said protrusion, said recess having a contact surface protrusion such that a tangent line (L) which is defined by said contact surfaces when contacting each other is inclined with respect to said horizontal planes;
- said contact surface (39,73) of the lower lip is located at least partially in the portion of the lower lip (23-43) extending beyond the upper lip (42); and
- said backing layer (55) extends along the lower side of the lower lip.
- according to a 41^{st} aspect, a floor covering consisting of hard floor panels (1), said panels (1) being provided, at least at the edges of two opposite sides, with coupling parts co-operating with each other, substantially in the form of a tongue and a groove, whereby the coupling parts are provided with integrated mechanical locking means, which coupling parts and locking means prevent the drifting apart of two coupled floor panels (1) in a direction perpendicular to the related edge and parallel to the underside of the coupled floor panels (1), **characterized in that** the floor panels (1) at least at said edges are provided with a lower lip bordering the underside of the groove which lower lip extends beyond the upper lip (42) bordering the upper side of the groove; in that the coupling means are located in the lower lip and the corresponding lower surface of the tongue; and in that the shaping of the tongue (9-31) and/or the lower lip (43) are such that the floor panels (1) can be coupled by laterally shifting them towards each other, starting from a mutual position in which the floor panels (1) at the edges to be coupled, are completely separated from each other.

- according to a 42^{nd} aspect, a floor covering in accordance with said 41^{st} aspect, further **characterized in that** the upper side of the tongue tip already at the first contact with the upper lip (42) is located underneath the upper lip (42) when the floor panels (1) are shifted towards each other.
- according to a 43^{rd} aspect, a floor covering in accordance with said 42^{nd} aspect, further **characterized in that** the locking means comprise a recess in the lower lip (43) and a protrusion at the lower side of the tongue and in that the shaping of the tongue (9-31) and/or the lower lip (43) are such that the tongue tip is located underneath the upper lip (42) before the protrusion is contacting the lower lip.
- according to a 44^{th} aspect, a floor covering in accordance with said 41^{st}, 42^{nd} or 43^{rd} aspect, further **characterized in that** the locking means comprise a recess in the lower lip (43) and a protrusion at the lower side of the tongue, and in that the lower lip (43) at the free extremity thereof is provided with a ramp surface (41-83), said ramp surface (41-83) allowing that a first floor panel (1), when shifting it over the floor to a second floor panel (1), is guided with its protrusion over said ramp surface.

- according to a 45^{th} aspect, a floor covering in accordance with any of said 41^{st} to 44^{th} aspect, further **characterized in that** the panels (1) are rectangular and in that at both pairs of opposed edges coupling parts are provided which prevent the drifting apart of two coupled floor panels (1) into a direction (R) perpendicular to the related edges and parallel to the underside (7) of the coupled floor panels (1).
- according to a 46^{th} aspect, a floor covering in accordance with any of said preceding aspects, **characterized in that** the edges, including the coupling means as well as the locking means, consist of a milled profile, and more particularly in that the tongue (9-31) and the groove (10-32) have a profile which can be produced by means of milling cutters having a diameter which is at least 5 times larger than the thickness (F) of the floor panels (1), the coupling parts being shaped such to allow that the lower side can cut by an angled cutter.
- according to a 47^{th} aspect, a floor covering in accordance with said 46^{th} aspect, further **characterized in that** the edges of the panels (1) have a profile which can be milled in two milling actions.
- according to a 48^{th} aspect, a floor covering, consisting of hard floor panels (1) which, at least at the edges of opposite sides (2-3, 26-27), are provided with coupling parts (4-5, 28-29), cooperating with each other, substantially in the form of a tongue (9-31) and a groove (10-32), whereby the coupling parts (4-5, 28-29) are provided with integrated mechanical locking means (6), said coupling parts and locking means preventing the drifting apart of two coupled floor panels (1) into a direction (R) perpendicular to the related edges (2-3, 26-27) and parallel to the underside (7) of the coupled floor panels (1), **characterized in that** said floor panels (1) show the following further features :
   - that the floor panels (1) are rectangular;
   - that coupling parts as defined above are provided at all four sides;
   - that the coupling parts (4-5, 28-29) and the locking means (6) are realized in one piece with the floor panels (1) themselves; and
   - that the coupling parts provide in snap-connections free of play.
- according to a 49^{th} aspect, a floor covering in accordance with said 48^{th} aspect, further **characterized in that** the lip bordering the lower side of the groove (10-32), more particularly the lower lip, extends beyond the lip bordering the upper side of the groove, more particularly the upper lip (42), and in that the locking means (6) are located in the portion of the lower lip extending beyond the upper lip (42).
- according to a 50^{th} aspect, a floor covering in accordance with said 48^{th} or 49^{th} aspect, further **characterized in that** the panels (1) can be disassembled by rotating them upwards.
- according to a 51^{st} aspect, a floor covering consisting of hard floor panels (1) which, at least at the edges of two opposite sides (2-3, 26-27), are provided with coupling parts (4-5, 28-29), cooperating with each other, substantially in the form of a tongue (9-31) and a groove (10-32), whereby these coupling parts (4-5, 28-29) are provided with integrated mechanical locking means (6) which prevent the drifting apart of coupled floor panels (1) into a direction (R) perpendicular to the related edges (2-3, 26-27) and parallel to the underside (7) of the coupled floor panels (1), **characterized in that** said floor covering further shows the following features:
   - that the panels (1) are rectangular;
   - that the above defined coupling parts, inclusive said locking means (6), are provided at both pairs of opposite edges;
   - that the coupling parts at the first pair of edges are such that they allow the engagement of two panels (1) at least by means of a turning movement; and
   - that the coupling parts of the second pair of edges comprise locking parts (46-47) having locking surfaces (48-49) which in locked condition are located completely in the groove (10) of the coupled panels (1), in other words between the vertical plane defined by the front side (20) of the groove (10) and the vertical plane defined by the free end of the lip (22) bordering the upper side of the groove (10).
- according to a 52^{nd} aspect, a floor covering in accordance with said 51^{st} aspect, further **characterized in that** the lips (22-23) bordering the groove belonging to the second pair of edges are of substantially the same length.
- according to a 53^{rd} aspect, a floor covering in accordance with said 51^{st} or 52^{nd} aspect, further **characterized in that** at the second pair of edges locking surfaces (48-49) are provided respectively at the lower side of the tongue (9) and the upper side of the lower lip (23).
- according to a 54^{th} aspect, a floor covering in accordance with said 51^{st}, 52^{nd} or 53^{rd} aspect, further **characterized in that** the first pair of edges comprises a groove (10) which at its lower side is bordered by a lip (23-43) which extends beyond the lip (22-42) bordering the upper side of the groove (10).
- according to a 55^{th} aspect, a floor covering in accordance with said 54^{th} aspect, further **characterized in that** the locking means (6) at said first pair of edges are at least partially located in the portion of the lower lip (23-43) which extends beyond the upper lip (22-42).
- according to a 56^{th} aspect, a floor covering in accordance with any of said 51^{st} to 55^{th} aspect, further **characterized in that** the panels (1) show longer sides and shorter sides and in that first pair of edges is provided at the longer sides, whereas the second pair is provided at the shorter sides.
- according to a 57^{th} aspect, a floor covering, consisting of hard floor panels (1) which, at least at the edges of two opposite sides (2-3, 26-27), are provided with coupling parts (4-5, 28-29), cooperating with each other, substantially in the form of a tongue (9-31) and a groove (10-32), whereby these coupling parts (4-5, 28-29) are provided with integrated mechanical locking means (6) which prevent the drifting apart of coupled floor panels (1) into a direction (R) perpendicular to the related edges (2-3, 26-27) and parallel to the underside (7) of the coupled floor panels (1), **characterized in that** said floor covering further shows the following features:
   - that the panels (1) are rectangular;
   - that the above defined coupling parts, inclusive said locking means (6), are provided at both pairs of opposite edges;
   - that the coupling parts at the first pair of edges are such that they allow the engagement of two panels (1) at least by means of a turning movement; and
   - that the coupling parts at the second pair of edges comprise locking parts (46-47) having one or more locing surfaces (48-49) which are perpendicular to the plane of the floor covering.
- according to a 58^{th} aspect, a floor covering in accordance with said 57^{th} aspect, further **characterized in that** both locking surfaces (48-49) of said second pair of edges are perpendicular to the plane of the floor covering.
- according to a 59^{th} aspect, a floor covering in accordance with said 57^{th} or 58^{th} aspect, further **characterized in that** the panels (1) show longer sides and shorter sides and in that said first pair of edges is provided at the longer sides, whereas the second pair is provided at the shorter sides.
- according to a 60^{th} aspect, a floor covering in accordance with any of said preceding aspects, further **characterized in that** the lower side of the lip bordering the lower side of the groove is coplanar with the lower side of the panels (1).
- according to a 61^{st} aspect, a floor covering in accordance to any of said preceding aspects, further **characterized in that** the floor covering further shows the following combination of characteristics: that the coupling parts (4-5, 28-29) and locking means (6) are realized in one piece with the core (8) of the floor panels (1); that the coupling parts (4-5, 28-29) have such a shape that two subsequent floor panels (1) can be engaged into each other exclusively by snapping together and/or turning, whereby each subsequent floor panel (1) can be inserted laterally into the previous; that the coupling parts (4-5, 28-29) provide in an interlocking, free from play, according to all directions in the plane which is situated perpendicular to the aforementioned edges; that the possible difference (E) between the upper and lower lip of the lips (22-23, 42-43) which border the aforementioned groove (10,32), measured in the plane of the floor panel (1) and perpendicular to the longitudinal direction of the groove (10,32), is smaller than one time the total thickness (F) of the floor panel (1); that the total thickness (F) of each related floor panel (1) is larger than or equal to 5 mm; and that the basic material of the floor panels (1), of which the aforementioned core (8) and the locking means (6) are formed, consists of a ground product which, by means of a binding agent or by means of melting together, is composed of a single compound, and/or of a product on the basis of synthetic material and/or a chip board with fine chips.
- according to a 62^{nd} aspect, a method of assembling a floor covering, said floor covering consisting of hard floor panels (1) of rectangular shape which, at both pairs of opposite sides (2-3, 26-27), are provided with coupling parts (4-5, 28-29) cooperating with each other, substantially in the form of a tongue (9-31) and a groove (10-32), whereby the coupling parts (4-5, 28-29) are provided with integrated mechanical locking means (6) made in one piece with the core (8) of the panels (1), and whereby these coupling parts and locking means prevent the drifting apart of two coupled floor panels (1) into a direction (R) perpendicular to the related edges (2-3, 26-27) and parallel to the underside (7) of the coupled floor panels (1), **characterized in that** the core (8) of the panels (1), including the locking means (6), substantially consist of MDF or HDF, whereby the locking means (6) further provide in an engagement free of play between the coupled panels (1) and in that said method comprises the steps of:
   - coupling a first of said panels (1) to an already installed panel or row of panels (1);
   - coupling a second of said panels (1) to said already installed panel or row of panels (1);
   - and shifting said second panel in a substantial planar fashion towards the first panel in order to couple the second panel to the first panel, wherein during said shifting the sliding properties are determined by the contact between the MDF or HDF surfaces of the coupling parts.
- according to a 63^{rd} aspect, a method of assembling a floor covering, said floor covering consisting of hard floor panels (1) of rectangular shape which, at both pairs of opposite sides (2-3, 26-27), are provided with coupling parts (4-5, 28-29) cooperating with each other, substantially in the form of a tongue (9-31) and a groove (10-32), whereby the coupling parts (4-5, 28-29) are provided with integrated mechanical locking means (6) such that they prevent the drifting apart of two coupled floor panels (1) into a direction (R) perpendicular to the related edges (2-3, 26-27) and parallel to the underside (7) of the coupled floor panels (1), whereby the lower lip (23-43) which limits the lower side of the groove (10), extends beyond the upper lip (22-42) and whereby said locking means (6) comprise a portion which inwardly slopes downward, which portion, at least partially, is located in the portion of the lower lip (23-43) which extends beyond the upper lip (22-42), whereby this portion cooperates with a surface at the lower side of the tongue, which is also inclined, **characterized in that** said method comprises the steps of:
   - laying a first of said hard floor panels (1);
   - placing a second panel next to an edge of said first panel, such that the tongue of one panel edge lies next to the groove of the other panel edge;

   - shifting the panels (1) towards each other, such that the tongue is moved into the groove, thereby urging down the lower lip, whereby the locking is realized in that the inclined surface of the lower lip systematically take place behind the inclined surface of the tongue.
- according to a 64^{th} aspect, a method in accordance with said 63^{rd} aspect, further **characterized in that** the first panel (1) is previously coupled to an already installed panel or row of panels (1), the side of this panel or row of panels (1) being directed to the first panel (1) being the side having the groove, and that the second panel, before being coupled to the first panel (1), first is coupled to the already installed panel or row of panels (1) by means of the steps of:
   - directing the second panel with its edge which is provided with a tongue towards the already installed panel or row of panels (1);
   - inserting the panel with the tongue at least partially into the groove of the already installed panel or row of panels (1);
   - and angling down the second panel so that the inclined locking surfaces are brought behind each other;
   whereby, after having brought the second panel into a substantially horizontal position, this panel is shifted towards the first panel, thereby remaining coupled to the previously installed panel or row of panels (1).
- according to a 65^{th} aspect, a method in accordance with said 63^{rd} aspect, further **characterized in that** the first panel (1) is previously coupled to an already installed panel or row of panels (1), the side of this panel or row of panels (1) being directed to the first panel (1) being the side having the groove, and in that the second panel, before being coupled to the first panel (1), first is coupled to the already installed panel or row of panels (1) by means of the steps of:
   - placing the second panel next to the edge of said previously installed panel or row of panels (1), such that the tongue of an edge of the second panel lies next to the groove of an edge of the other panel or row of panels (1);
   - shifting the second panel towards the previously of the second panel is moved into said groove, thereby urging down the lower lip of the already installed panel or row of panels (1), whereby the locking is realized in that the inclined surface of this lower lip systematically takes place behind the inclined surface at said tongue;
   whereby, after having coupled the second panel with the previously installed panel or row of panels (1), this second panel is shifted towards the first panel, thereby remaining coupled to the previously installed panel or row of panels (1).
- according to a 66^{th} aspect, a method in accordance with any of said 62^{nd} to 65^{th} aspect, further **characterized in that** floor panels (1) are used providing in a coupling without play, as well as in a joining offering a snapping-together effect.
- according to a 67^{th} aspect, a method in accordance with any of said 62^{nd} to 66^{th} aspect, further **characterized in that** panels (1) are applied whereby the shaping of the tongue (9) is such that the upper side of the tongue (9) already with the first contact becomes situated under the lower side of the upper lip (42) when the floor panels (1) are shifted towards each other.
- according to a 68^{th} aspect, a method in accordance with any of said 62^{nd} to 67^{th} aspect, further **characterized in that** panels (1) are used showing the features described in any of the above-mentioned 1^{st} to 49^{th} aspects.
- according to a 69^{th} aspect, a method for the manufacturing of floor panels (1) for a floor covering as described in any of the preceding claims, which floor panels (1) at least at the edges of two opposite sides are provided with coupling parts co-operating with each other, substantially in the form of a tongue and a groove, whereby the coupling parts are provided with integrated mechanical locking means made in one piece out of the material of the panels (1) which prevent the drifting apart of two coupled floor panels (1) into a direction perpendicular to the related edges and parallel to the underside of the coupled floor panels (1), **characterized in that** the tongue and/or groove is realized by means of a milling process with at least two subsequent milling cycles by means of milling cutters which are positioned in different angles in respect to the related floor panel (1).
- according to a 70^{th} aspect, a method in accordance with said 69^{th} aspect, further **characterized in that** one milling cutter is rotated in a plane substantially parallel to the plane of the panel, whereas the second milling cutter is rotated in a plane which is inclined in respect to the plane of the panel (1).

- according to a 71^{st} aspect, a method in accordance with said 69^{th} or 70^{th} aspect, further **characterized in that** during each aforementioned milling cycles each time substantially the final shape of one flank (71-72), either of the tongue or the groove, is realized.
- according to a 72^{nd} aspect, a method in accordance with said 69^{th}, 70^{th} or 71^{st} aspect, further **characterized in that** for the aforementioned milling cycles milling cutters (63-64-65-66-67-68-69-70) are applied which extend outside the groove (10-32), respectively the tongue (9-31), and more particularly show diameters (G) which are at least five times larger than the thickness (F) of the floor panels (1).
- according to a 73^{rd} aspect, a method in accordance with said 72^{nd} aspect, further **characterized in that** said diameters (G) are at least twenty times larger than the thickness (F) of the floor panels (1).
- according to a 74^{th} aspect, a method in accordance with any of said 69^{th} to 73^{th} aspects, further **charaterized in that** at all four sides of the floor panel (1) a profile is provided and that the floor panels (1) are displaced according to two perpendicular movements (V1-V2), whereby during one of the movements profiles at two opposite edges are provided, whereas during the other movement profiles are provided at the small edges.
- according to a 75^{th} aspect, a method for manufacturing floor panels (1), preferably according to any of said 69^{th} to 74^{th} aspects, which floor panels (1) at least at the edges of two opposite sides are provided with coupling parts co-operating with each other, substantially in the form of a tongue and a groove, whereby the coupling parts are provided with integrated mechanical locking means made in one piece out of the material of the panels (1) which prevent the drifting apart of two coupled floor panels (1) into a direction perpendicular to the related edges and parallel to the underside of the coupled floor panels (1), **characterized in that** the complete shape of the edges is formed solely by sawing and milling.
- according to a 76^{th} aspect, a floor panel for realizing a floor covering according to any of the 1^{st} to 61^{st} aspects and/or for assembling a floor covering according to a method described in any of the 62^{nd} to 68^{th} aspects.

The invention also relates to any possible combination of one or more of the above aspects, as well as to any combination of the features of one or more aspects with the features of one or more of the appended claims.

## Claims

1. Floor panel, for forming a floor covering,
said floor panel (1) comprising a core of MDF or HDF;
said floor panel (1) at least at the edges of two opposite sides being provided with coupling parts substantially in the form of a tongue (9,31) and a groove (10,32), said groove (10,32) being bordered by an upper lip (22,42) and a lower lip (23,43), whereby these coupling parts allow that two of such panels can be coupled to each other;
wherein the coupling parts are provided with integrated mechanical locking elements (33-34) which prevent the drifting apart of two coupled floor panels (1) in a direction perpendicular to the related edges and parallel to the underside of the coupled floor panels (1);
wherein said coupling parts and said locking elements are formed in one piece from said core, thus in MDF or HDF;
wherein said locking elements comprise contact surfaces, defining a locking surface at the lower side of the tongue (9,31) and a locking surface at the upper side of the lower lip (23,43), whereby upon coupling two panels to each other, the respective locking surfaces cooperate with each other; and
wherein said coupling parts and said locking elements are configured such that two of said panels can be joined by turning one panel into the other;
**characterized in that** said floor panel (1) has a thickness of 5 to 15 mm;
and **in that** roundings (79-80) are provided at the edges of the locking elements (33-34).

2. Floor panel according to claim 1, **characterized in that** said locking elements comprise a recess in said lower lip (23,43) and a protrusion at the lower side of said tongue (9,31), whereby in coupled condition of two of such panels the protrusion of one of said panels cooperates with the recess of the other panel.

3. Method for manufacturing a floor panel,
said floor panel (1) being of the type having at least two opposite sides, defining side edges, which are provided with coupling parts, allowing that two of such panels can be mechanically coupled to each other, said coupling parts being in the form of a tongue (9, 31) and a groove (10, 32) and being provided with locking elements (33-34), said coupling parts and locking elements (33-34) enabling a locking between coupled panels in vertical and horizontal directions,
said method including producing profiles, inclusive said tongue (9, 31) and said groove (10, 32), on said at least two opposite side edges in order to form said coupling parts and locking elements (33-34),
**characterized in that** the step of producing the profile at the side comprising the groove (10, 32) comprises the steps of
- providing said groove (10, 32) with an upper side and a bottom side such that said groove (10, 32) is bordered by an upper lip (22,42) and a lower lip (23, 43);
- forming said profile comprising the groove (10, 32) by means of at least two cutters which are positioned at different angles relative to said floor panel (1); and
- forming said lower lip (23, 43) such that an upper side of said lower lip (23, 43) of said groove (10, 32) includes said recess, wherein said recess is formed by means of an inclined cutter, thereby forming said recess at least partially underneath the upper lip (22,42), said recess preferably being formed such that the deepest point of the recess is located beyond the distal end of the upper lip (22,42).

4. Method according to claim 3, **characterized in that** it further includes positioning the first one of said two cutters in a plane that extends substantially parallel to a plane including said floor panel (1), and causing said first one of said tools to enter said side edge of said floor panel (1) laterally; and **in that** the second one of said two cutters is inclined in reference to said plane by an angle less than 90 degrees.

5. Floor panel for providing a floor covering, which is rectangular, i.e. elongated or square; said floor panel (1) being selected from the group of laminated floor panels, veneer parquet and prefabricated parquet; **characterized in that** the panel (1) further shows the combination of the following features:
said floor panel (1) having an underside and an upper side and first and second pairs of opposite sides, defining edges at the panels;
wherein the edges of at least the first pair of opposite sides are provided with coupling parts which allow that two of such panels can be coupled to each other;
wherein these coupling parts are substantially in the form of a tongue (9, 31) and a groove (10, 32), said groove (10, 32) being delimited by an upper lip (22, 42) and a lower lip (23, 43), said lower lip (23, 43) extending beyond the upper lip (22, 42);
wherein the difference between said upper lip (22, 42) and said lower lip (23, 43) measured in the plane of the floor panel (1) and perpendicular to the longitudinal direction of said groove (10, 32) is smaller than one time the thickness of the floor panel (1);
wherein said upper lip (22, 42) shows an upper side which forms part of the upper side of the floor panel (1);
wherein the upper wall of the groove (10, 32) comprises a flat contact surface which in coupled condition of two of such panels cooperates with an upper surface at said tongue (9, 31);
wherein the coupling parts are provided with integrated mechanical locking elements which prevent the drifting apart of two coupled flooring panels in a direction perpendicular to the related edges and parallel to the underside of the coupled floor panels;
wherein said coupling parts and locking elements are cut edge profiles, being cut in said edges of the panel (1);
wherein said locking elements define contact surfaces, respectively at said tongue (9, 31) and said groove (10, 32), acting as locking surfaces which in coupled condition of two of such panels prevent said drifting apart of the panels, the locking surface provided at he groove (10, 32) being located in said lower lip (23, 43) at a location beyond the distal end of said upper lip (22, 42);
wherein said coupling parts and locking elements allow that two of such panels can be joined, respectively disconnected, by means of a turning movement; and
wherein at the entrance of the groove (10, 32), a chamfer is provided at the lower side of the upper lip (22, 42).

6. Floor panel according to claim 5, **characterized in that** in coupled condition of two of such panels, the coupling parts and locking elements provide an interlocking free from play.

7. Floor covering, said floor covering comprising a plurality of hard floor panels (1),
- said panels being rectangular, i.e. elongated or square, and having a first and a second pair of opposite side edges,
- said panels belonging to the group of
- laminate floor panels (1) having a top layer with a printed decor and
- prefabricated parquet;
- said panels having a substantially planar lower side; **characterized in that** the floor covering further shows following features:
said first pair of opposite side edges of the floor panels (1) having at least following features:
- the edges are provided with coupling parts substantially in the form of a tongue (9, 31) and a groove (10, 32), said groove (10, 32) being delimited by an upper lip (22,42) and a lower lip (23, 43), whereby these coupling parts allow that two of such panels can be coupled to each other; and
- the coupling parts are provided with integrated mechanical locking elements (33-34) which prevent the drifting apart of two coupled flooring panels in a direction perpendicular to the related edges and parallel to the underside of the coupled floor panels (1);
- the coupling parts and locking elements (33-34) are configured such that two of such panels can be coupled laterally only by means of turning one panel in the edge of another panel; and
said second pair of opposite side edges of the panel having at least following features:
- the edges are provided with coupling parts substantially in the form of a tongue (9, 31) and a groove (10, 32), said groove (10, 32) being delimited by an upper lip (22,42) and a lower lip (23, 43), whereby these coupling parts allow that two of such panels can be coupled to each other;
- the coupling parts are provided with integrated mechanical locking elements (33-34) which prevent the drifting apart of two coupled flooring panels in a direction perpendicular to the related edges and parallel to the underside of the coupled floor panels (1);
- the coupling parts and locking elements (33-34) are configured such that two of such panels can be coupled laterally only by means of turning one panel in the edge of another panel.

8. Floor covering according to claim 7, **characterized in that** at the first pair of edges the lower lip (23, 43) extends beyond the upper lip (22,42), and **in that** the difference between the upper lip (22,42) and the lower lip (23, 43), measured in the plane of the floor panel (1) is smaller than one time the thickness of the floor panel (1).

9. Floor panel for providing a floor covering, which is rectangular, i.e. elongated or square; said floor panel (1) having a substantially planar underside and a substantially planar upper side and first and second pairs of opposite sides, defining edges at the floor panel (1); **characterized in that** the floor panel (1) further shows the following combination of features:
the edges of at least the first pair of opposite sides are provided with coupling parts which allow that two of such panels can be coupled to each other;
these coupling parts are substantially in the form of a tongue (9, 31) and a groove (10, 32), said groove (10, 32) being delimited by an upper lip (22,42) having a distal end and a lower lip (23, 43), said lower lip (23, 43) extending beyond said distal end of the upper lip (22,42);
the upper wall of the groove (10, 32) comprises a flat contact surface which in coupled condition of two of such panels cooperates with an upper surface at said tongue (9, 31);
the coupling parts are provided with integrated mechanical locking elements (33-34) which prevent the drifting apart of two coupled floor panels (1) in a direction perpendicular to the related edges and parallel to the underside of the coupled floor panels (1);
said locking elements (33-34) include a locking element at said lower lip (23, 43) bordering a recess in the upper side of said lower lip (23, 43) and a protrusion at the lower side of said tongue (9, 31);
said coupling parts and locking elements (33-34) are formed as cut edge profiles located in between the plane defined by the substantially planar underside of the panel and the plane defined by the substantially planar upper side of the panel;
said locking elements (33-34) define contact surfaces, respectively at said lower lip (23, 43) and said tongue (9, 31), acting as locking surfaces which in coupled condition of two of such panels prevent said drifting apart of the panels;
the coupling parts and locking elements (33-34) allow that two of such panels can be joined, respectively disconnected, by means of a turning movement;
wherein said recess measured in the plane of the floor panel (1) and perpendicular to the longitudinal direction of said groove (10, 32) is located partially beyond the distal end of the upper lip (22,42) and partially below the upper lip (22,42);
wherein at the entrance of the groove (10, 32), a chamfer is provided at the lower side of the upper lip (22,42); and
wherein said coupling parts and locking elements (33-34) allow that two of such panels can be coupled in a manner free from play.

10. Floor panel according to claim 9, wherein said floor panel (1) is selected from the group of laminated floor panels (1), veneer parquet and prefabricated parquet.

11. Floor panel according to claim 9 or 10, **characterized in that** said second pair of opposite sides is also provided with coupling parts substantially in the form of a tongue (9, 31) and a groove (10, 32), wherein these coupling parts are provided with integrated mechanical locking elements (33-34) which prevent the drifting apart of two coupled flooring panels in a direction perpendicular to the related edges and parallel to the underside of the coupled floor panels (1).

12. A connection for joining panels which comprise a core (8), said core (8) being of a core (8) material selected from the group consisting of medium density fibreboard (MDF) and high density fibre board (HDF);
said panels comprising a decorative side, a back side opposite from the decorative side, a first pair of opposite side edges and a second pair of opposite side edges;
said connection comprising coupling parts provided at said first pair of opposite side edges and allowing that two of such panels can be coupled to each other at the concerned side edges;
wherein these coupling parts are substantially in the form of a tongue (9, 31) and a groove (10, 32), said tongue (9, 31) and groove (10, 32) being formed in one piece with said core (8) material selected from the group consisting of medium density fibreboard (MDF) and high density fibre board (HDF);
wherein said groove (10, 32) closest to said decorative side is bordered by a first lip having a distal end and said groove (10, 32) closest to said back side is bordered by a second lip, also having a distal end, said second lip extending beyond said distal end of the first lip;
wherein the coupling parts are provided with integrated mechanical locking elements (33-34) which in a free coupled condition prevent the drifting apart of two coupled panels in a direction perpendicular to the related side edges and parallel to the plane of the coupled panels;
wherein said locking elements (33-34) define contact surfaces, respectively at said second lip and said tongue (9, 31), acting as locking surfaces which in a coupled condition of two of such panels prevent said drifting apart of the panels, the locking surface provided at the groove (10, 32) being located in said second lip at a location beyond the distal end of said first lip;
wherein said locking elements (33-34) which prevent the drifting apart of coupled panels in a plane parallel to the plane of the panels are only active between said second lip and the corresponding side of the tongue (9, 31); and
wherein the coupling parts and locking elements (33-34) allow that two of such panels can be joined by means of a turning movement;
**characterized in that** said coupling parts and locking elements (33-34) are configured such that in the coupled condition of two of such panels at least two intermediate spaces exist between the coupled side edges, respectively a first intermediate space and a second intermediate space;
said first intermediate space being located between the deepest point of the groove (10, 32) and the distal end of the tongue (9, 31) and extending at least partly between the second lip and the tongue (9, 31); and
said second intermediate space being located between the distal end of the second lip of the one of the coupled panels and a wall portion of the other of the panels that is located in front of said distal end.

13. Connection according to claim 12, wherein the length with which the second lip extends beyond the first lip, measured in the plane of the panel, is smaller than one time the thickness of the panel.

14. Panel, **characterized in that** it is provided with coupling parts and locking elements (33-34), allowing to couple two of such panels to each other, thereby making use of a connection according to claims 12 or 13.

15. Floor panel for providing a floor covering, which is rectangular, i.e. elongated or square, said floor panel (1) showing the combination of following features:
said floor panel (1) having a substantially planar underside and a substantially planar upper side and first and second pairs of opposite sides, defining edges at the panels;
wherein the edges of at least the first pair of opposite sides are provided with coupling parts which allow that two of such panels can be coupled to each other;
wherein these coupling parts are substantially in the form of a tongue (9, 31) and a groove (10, 32), said groove (10, 32) being delimited by an upper lip (22,42) having a distal end and a lower lip (23, 43), said lower lip (23, 43) extending beyond said distal end of the upper lip (22,42);
wherein the coupling parts are provided with integrated mechanical locking elements (33-34) which prevent the drifting apart of two coupled flooring panels in a direction perpendicular to the related edges and parallel to the underside of the coupled floor panels (1);
wherein said locking elements (33-34) include a locking element at said lower lip (23, 43) bordering a recess in the upper side of said lower lip (23, 43) and a locking element formed by a protrusion at the lower side of said tongue (9, 31);
wherein said locking elements (33-34) define contact surfaces, respectively at said lower lip (23, 43) and said tongue (9, 31), acting as locking surfaces which in coupled condition of two of such panels prevent said drifting apart of the panels, the locking surface provided at the groove (10, 32) being located in said lower lip (23, 43) at a location beyond the distal end of said upper lip (22,42);
wherein the coupling parts and locking elements (33-34) allow that two of such panels can be joined, respectively disconnected, by means of a turning movement;
wherein said locking elements (33-34) which prevent the drifting apart of two of such coupled panels are substantially only present between the lower side of said tongue (9, 31) and the upper side of the lower lip (23, 43);
wherein the recess has an inclined proximal side, said side extending upwards from the bottom of the recess towards the inner side of the panel;
wherein between the inclined proximal side of the recess and the deepest point of the groove (10, 32), a distinctly formed bottom portion of the actual groove (10, 32) is present, said bottom portion being horizontal or having a general inclination which is less pronounced than the inclination of said inclined proximal side of the recess; and
wherein said panel at said first pair of edges is provided with at least one of following features :
- the presence of an inclined front side at said protrusion;
- the presence of a intermediate space between the front side of the protrusion and the inclined proximal side of said recess, when two of such panels are coupled to each other.

16. Floor panel according to claim 15, **characterized in that** said floor panel (1) is selected from the group of laminated floor panels (1), veneer parquet and prefabricated parquet.

17. Floor panel according to claim 15 or 16, **characterized in that** said second pair of opposite sides is also provided with coupling parts substantially in the form of a tongue (9, 31) and a groove (10, 32), wherein these coupling parts are provided with integrated mechanical locking elements (33-34) which prevent the drifting apart of two coupled flooring panels in a direction perpendicular to the related edges and parallel to the underside of the coupled floor panels (1).

18. Floor panel, said panel being rectangular, i.e. elongated or square, and having a first and a second pair of opposite side edges; said panel being a laminate floor panel or a floor panel of prefabricated parquet; **characterized in that** the floor covering further shows following features:
said first pair of opposite side edges is provided with coupling parts which allow that two of such panels can be coupled to each other and with integrated mechanical locking means (6) which prevent the drifting apart of two coupled floor panels in a direction perpendicular to the related edges and parallel to the underside of the coupled floor panels (1), whereby these coupling parts and locking means (6) are configured such that two of such panels can be coupled by means of turning one panel in the edge of another panel or whereby said coupling parts comprise an upper lip and a lower lip extending beyond said upper lip; and
said second pair of opposite side edges is provided with coupling parts which allow that two of such panels can be interlocked to each other.

19. Floor panel according to claim 18, **characterized in that** instead of being a laminate floor panel or a floor panel of prefabricated parquet, it is a floor panel different herefrom, and **in that** it has a thickness of maximum 15 mm, and preferably a thickness of 5 to 15 mm.
